# EUROPEAN PATENT APPLICATION

(11) **EP 4 492 521 A2**
(43) Date of publication of application: **15.01.2025**
(21) Application number: 24187877.6
(22) Date of filing: 10.07.2024
(51) Int. Cl.: H01M 10/04, H01M 10/052, H01M 10/0587, H01M 50/536

(54) **BATTERY CELL AND ELECTRIC DEVICE**

(30) Priority: 10.07.2023 CN 202310835174
(71) Applicant: Ningde Amperex Technology Limited, Ningde City, Fujian Province 352100 (CN)
(72) Inventor: LI, Chenchen, Ningde City, Fujian Province, People s Republic of China, 352100 (CN)
(74) Representative: Icosa

(57) **Abstract**

This application provides a battery cell (100) and an electric device. An electrode assembly (10) of the battery cell (100) includes a flat region (10a) and a first bent region connected in a first direction; and the electrode assembly (10) includes a positive electrode plate (11), a negative electrode plate (12), and a first separator (13). The positive electrode plate (11) includes a positive electrode winding starting section (112) and first flat section (113) located in the flat region (10a); and the negative electrode plate (12) includes a negative electrode winding starting section (121). The negative electrode winding starting section (121) is located in the flat region (10a), and in a second direction, the negative electrode winding starting section (121) is located between the positive electrode winding starting section (112) and the first flat section (113). Negative electrode active substance layers on two sides of the negative electrode winding starting section (121) are disposed opposite a positive electrode active substance layer (115) on the positive electrode winding starting section (112) and a positive electrode active substance layer (115) on the first flat section (113) respectively. The first separator (13) has a first winding starting end (1311), where the first winding starting end (1311) is flush with a positive electrode winding starting end (1121), or the first winding starting end (1311) is flush with a negative electrode winding starting end (1211). This can increase energy density and production efficiency of the battery cell (100).

## Description

### TECHNICAL FIELD

This application relates to the field of battery technologies, and specifically, to a battery cell and an electric device.

### BACKGROUND

With the development of new energy technologies, battery cells have been increasingly widely used, for example, in fields such as portable electronic devices, electric transportation tools, electric tools, and unmanned aerial vehicles. As the demands for battery cells are increasing, higher requirements are imposed on the production efficiency of battery cells.

### SUMMARY

Embodiments of this application provide a battery cell and an electric device, so as to improve production efficiency of the battery cell.

According to a first aspect, some embodiments of this application provide a battery cell. The battery cell includes an electrode assembly, where the electrode assembly is a wound structure, and the electrode assembly includes a flat region and a first bent region, in a first direction, the first bent region being connected to an end of the flat region; and the electrode assembly includes a positive electrode plate, a negative electrode plate, and a first separator, the first separator being configured to separate the positive electrode plate from the negative electrode plate. The positive electrode plate includes a first bent section located in the first bent region and a positive electrode winding starting section and first flat section located in the flat region, where in a second direction, the positive electrode winding starting section is disposed opposite the first flat section, the first flat section and the positive electrode winding starting section are connected to two ends of the first bent section respectively, and an end of the positive electrode winding starting section facing away from the first bent section is a positive electrode winding starting end of the positive electrode plate. The negative electrode plate includes a negative electrode winding starting section, where the negative electrode winding starting section is located in the flat region, in the second direction, the negative electrode winding starting section is located between the positive electrode winding starting section and the first flat section, and in the first direction, an end of the negative electrode winding starting section facing the first bent section is a negative electrode winding starting end of the negative electrode plate. A negative electrode active substance layer on one side of the negative electrode winding starting section is disposed opposite a positive electrode active substance layer on the positive electrode winding starting section, and a negative electrode active substance layer on another side of the negative electrode winding starting section is disposed opposite a positive electrode active substance layer on the first flat section. The first separator has a first winding starting end, where the first winding starting end is flush with the positive electrode winding starting end, or the first winding starting end is flush with the negative electrode winding starting end. An extension direction of a winding axis, the first direction, and the second direction of the electrode assembly are perpendicular to each other.

In the foregoing technical solution, the two ends of the first wound and bent section, namely the first bent section, of the positive electrode plate are connected to the positive electrode winding starting section and the first flat section respectively, and the negative electrode active substance layers on the two sides of the negative electrode winding starting section are disposed opposite the positive electrode active substance layer on the positive electrode winding starting section and the positive electrode active substance layer on the first flat section respectively, meaning that the negative electrode active substance layer is provided on both sides of the negative electrode winding starting section, and the negative electrode active substance layers on the two sides of the negative electrode winding starting section are disposed opposite the positive electrode active substance layer on the positive electrode winding starting section and the positive electrode active substance layer on the first flat section respectively. This not only is conducive to increasing energy density of the battery cell, but also can reduce the number of changes in the coating manner of the negative electrode active substance layer or consistently use continuous double-sided coating for the negative electrode active substance layer during manufacturing of the negative electrode plate, helping improve production efficiency. The first winding starting end of the first separator is flush with the positive electrode winding starting end, so the first separator and the positive electrode plate can be wound synchronously, or the first winding starting end is flush with the negative electrode winding starting end, so the first separator and the negative electrode plate can be wound synchronously, thereby further improving the production efficiency.

In some embodiments of the first aspect of this application, the electrode assembly further includes a second bent region, in the first direction, the second bent region being located on a side of the flat region facing away from the first bent region; and the negative electrode plate further includes a second bent section located in the second bent region and a second flat section located in the flat region, where in the second direction, the second flat section is disposed opposite the negative electrode winding starting section, and the second flat section and the negative electrode winding starting section are connected to two ends of the second bent section respectively; where positive electrode active substance layers on two sides of the positive electrode winding starting section are disposed opposite the negative electrode active substance layer on the negative electrode winding starting section and a negative electrode active substance layer on the second flat section respectively.

In the foregoing technical solution, the positive electrode active substance layers on the two sides of the positive electrode winding starting section are disposed opposite the negative electrode active substance layer on the negative electrode winding starting section and the negative electrode active substance layer on the second flat section respectively, meaning that the positive electrode active substance layer is provided on both sides of the positive electrode winding starting section. This not only is conducive to increasing the energy density of the battery cell, but also can reduce the number of changes in the coating manner or consistently use continuous double-sided coating during manufacturing of the positive electrode plate, helping improve the production efficiency.

In some embodiments of the first aspect of this application, the negative electrode plate includes a negative electrode current collector, where in a winding direction of the electrode assembly, the negative electrode active substance layer is provided on both sides of the negative electrode current collector at any position; and/or the positive electrode plate includes a positive electrode current collector, where in the winding direction of the electrode assembly, the positive electrode active substance layer is provided on both sides of the positive electrode current collector at any position.

In the foregoing technical solution, in the winding direction of the electrode assembly, the negative electrode active substance layer is provided on both sides of the negative electrode current collector at any position, so during manufacturing of the negative electrode plate, continuous double-sided coating can be used to form the negative electrode plate. This reduces the number of changes in the coating manner of the negative electrode active substance layer or consistently uses continuous double-sided coating for the negative electrode active substance layer during manufacturing of the negative electrode plate, helping improve the production efficiency. In the winding direction of the electrode assembly, the positive electrode active substance layer is provided on both sides of the positive electrode current collector at any position, so during manufacturing of the positive electrode plate, continuous double-sided coating can be used to form the positive electrode plate. This reduces the number of changes in the coating manner of the positive electrode active substance layer or consistently uses continuous double-sided coating for the positive electrode active substance layer during manufacturing of the positive electrode plate, helping improve the production efficiency. In some embodiments of the first aspect of this application, the electrode assembly further includes a second separator, where the second separator is configured to separate the positive electrode plate from the negative electrode plate, and the first separator and the second separator are located on two sides of the negative electrode plate respectively; where the first separator and the second separator are connected to form a first connection portion and a second connection portion, and in the extension direction of the winding axis, the first connection portion and the second connection portion are located on two sides of the negative electrode plate respectively.

In the foregoing technical solution, the first separator and the second separator are connected to form the first connection portion and the second connection portion. The first separator and the second separator have a small space to move relative to the negative electrode plate or the first separator and the second separator cannot move relative to the negative electrode plate, which reduces the risk of displacement of the first separator and the second separator. In addition, the first separator and the second separator are connected, providing a binding force between the first separator and the second separator, which reduces the risks of wrinkles and shrinkage of the first separator and the second separator, thereby reducing the risk of short circuits in the battery cell. The first connection portion and the second connection portion are located on the two sides of the negative electrode plate in the extension direction of the winding axis respectively, facilitating the connection of the first separator and the second separator.

In some embodiments of the first aspect of this application, the first separator has a first winding starting section located in the flat region, an end of the first winding starting section being the first winding starting end of the first separator, and the second separator has a second winding starting section located in the flat region, an end of the second winding starting section being a second winding starting end of the second separator, where in the second direction, the first winding starting section and the second winding starting section are located on two sides of the negative electrode winding starting section respectively; where the first winding starting section and the second winding starting section are connected to form the first connection portion and the second connection portion, and in the extension direction of the winding axis, the first connection portion and the second connection portion are located on two sides of the negative electrode winding starting section respectively.

In the foregoing technical solution, the first winding starting section and the second winding starting section are connected to form the first connection portion and the second connection portion. This not only facilitates the connection of the first separator and the second separator, but also can reduce the risks of displacement, wrinkles, and shrinkage of the first separator and the second separator during the winding and after the winding of the electrode assembly is completed, reducing the risk of short circuits in the battery cell, thereby improving the quality of the battery cell.

In some embodiments of the first aspect of this application, the electrode assembly further includes a second separator, where the second separator is configured to separate the positive electrode plate from the negative electrode plate; where the first separator includes a first base film and a first adhesive layer, where at least one side of the first base film is provided with the first adhesive layer, and the positive electrode plate or the negative electrode plate is adhered to the first base film through the first adhesive layer; and/or the second separator includes a second base film and a second adhesive layer, where at least one side of the second base film is provided with the second adhesive layer, and the positive electrode plate or the negative electrode plate is adhered to the second base film through the second adhesive layer.

In the foregoing technical solution, the first separator includes the first base film and the first adhesive layer, and at least one side of the first base film is provided with the first adhesive layer, so the first base film can be adhered to the positive electrode plate or the negative electrode plate through the first adhesive layer. Before winding, the first separator may be laminated with the positive electrode plate as a whole, or the first separator may be laminated with the negative electrode plate as a whole, to mitigate shrinkage of the first separator, which otherwise causes short circuits in the battery cell. The second separator includes the second base film and the second adhesive layer, and at least one side of the second base film is provided with the second adhesive layer, so the second base film can be adhered to the positive electrode plate or the negative electrode plate through the second adhesive layer. Before winding, the second separator may be laminated with the positive electrode plate as a whole, or the second separator may be laminated with the negative electrode plate as a whole, to mitigate shrinkage of the second separator, which otherwise causes short circuits in the battery cell.

In some embodiments of the first aspect of this application, the electrode assembly further includes a second separator, where the second separator is configured to separate the positive electrode plate from the negative electrode plate, the first separator having the first winding starting end, and the second separator having a second winding starting end; where the first separator and the second separator are disposed on two sides of the negative electrode plate, the first winding starting end is flush with the negative electrode winding starting end, and the second winding starting end is flush with the negative electrode winding starting end.

In the foregoing technical solution, the first winding starting end is flush with the negative electrode winding starting end, and the second winding starting end is flush with the negative electrode winding starting end. This not only can separate the negative electrode winding starting section from the positive electrode plate in the second direction, but also facilitates winding of the negative electrode plate, the first separator, and the second separator in the same direction, improving the production efficiency of the battery cell.

In some embodiments of the first aspect of this application, the electrode assembly further includes a second separator, where the second separator is configured to separate the positive electrode plate from the negative electrode plate, the first separator having the first winding starting end, and the second separator having a second winding starting end; where the first separator and the second separator are disposed on two sides of the positive electrode plate, the first winding starting end is flush with the positive electrode winding starting end, and the second winding starting end is flush with the positive electrode winding starting end.

In the foregoing technical solution, the first winding starting end is flush with the positive electrode winding starting end, and the second winding starting end is flush with the positive electrode winding starting end. This not only can separate the positive electrode winding starting section from the negative electrode plate in the second direction, but also facilitates winding of the positive electrode plate, the first separator, and the second separator in the same direction, improving the production efficiency of the battery cell.

In some embodiments of the first aspect of this application, a positive electrode active substance layer on the first bent section facing the negative electrode winding starting end is a first positive electrode active substance portion; and the battery cell further includes a protective member, where at least a portion of the protective member is located between the first positive electrode active substance portion and the negative electrode winding starting end.

In the foregoing technical solution, the first positive electrode active substance portion faces the negative electrode winding starting end, and at least a portion of the protective member is located between the first positive electrode active substance portion and the negative electrode winding starting end. The protective member can prevent ions released from the first positive electrode active substance portion from moving to the negative electrode winding starting end, reducing the risk of lithium precipitation at the negative electrode winding starting end in the battery cell and improving the safety performance of the battery cell.

In some embodiments of the first aspect of this application, the protective member includes a first section, where the first section is located in the first bent region, and the first section is located between the first positive electrode active substance portion and the negative electrode winding starting end.

In the foregoing technical solution, the first section is located in the first bent region, the first section is close to the first positive electrode active substance portion, and the first section is located between the first positive electrode active substance portion and the negative electrode winding starting end. This can better prevent ions released from the first positive electrode active substance portion from moving to the negative electrode winding starting end, reducing the risk of lithium precipitation at the negative electrode winding starting end in the battery cell and improving the safety performance of the battery cell.

In some embodiments of the first aspect of this application, the protective member further includes a second section, where the second section is located in the flat region, the second section is connected to an end of the first section, and observed along the second direction, the second section and the negative electrode winding starting section at least partially overlap.

In the foregoing technical solution, the protective member further includes the second section, where the second section is located in the flat region, the second section is connected to an end of the first section, and observed along the second direction, the second section and the negative electrode winding starting section at least partially overlap. This can increase the coverage area of the protective member, allowing the protective member to better prevent ions released from the first positive electrode active substance portion from moving to the negative electrode winding starting end, thereby reducing the risk of lithium precipitation at the negative electrode winding starting end. In addition, this can increase the connection area between the protective member and another structure, thereby facilitating the fixing of the protective member and improving the connection stability of the protective member.

In some embodiments of the first aspect of this application, in the first direction, a distance between an end of the second section facing away from the first section and the negative electrode winding starting end is L₁, where L₁ ≥ 2 mm.

In the foregoing technical solution, when L₁ < 2 mm, the overlapping section between the first section and the negative electrode winding starting section is small, not significantly preventing ions released from the first positive electrode active substance portion from moving to the negative electrode winding starting section. Therefore, when L₁ ≥ 2 mm, it helps the protective member to more effectively prevent ions released from the positive electrode active substance layer from moving to the negative electrode winding starting section, reducing the risk of lithium precipitation at the negative electrode winding starting end in the battery cell and improving the safety performance of the battery cell.

In some embodiments of the first aspect of this application, L₁ ≤ 10 mm.

In the foregoing technical solution, when L₁ > 10 mm, the overlapping section between the first section and the negative electrode winding starting section is long, so too many ions released from the positive electrode active substance layer cannot move to the negative electrode plate, meaning that a large amount of active substance in a first positive electrode active substance layer cannot take effects, reducing the capacity of the battery cell. Therefore, when L₁ ≤ 10 mm, it ensures that while the protective member can reduce the risk of lithium precipitation in the battery cell, as many ions as possible released from the positive electrode active substance layer can move to the negative electrode plate, allowing the positive electrode active substance layer to fully take effects, thereby ensuring a high capacity of the battery cell.

In some embodiments of the first aspect of this application, both ends of the first section are connected to the second section, and in the second direction, the second sections at the two ends of the first section are located on two sides of the negative electrode winding starting section respectively.

In the foregoing technical solution, both ends of the first section are connected to the second section, such that the first section can prevent movement of the positive electrode active substance layer toward the negative electrode winding starting end in the first direction, and the two second sections can prevent movement of the positive electrode active substance layers toward the negative electrode winding starting section from the two sides of the negative electrode winding starting section in the second direction. In this way, the protective member has a larger coverage area, and can better prevent ions released from the first positive electrode active substance portion from moving to the negative electrode winding starting end, reducing the risk of lithium precipitation at the negative electrode winding starting end and improving the safety performance of the battery cell. Both ends of the first section are connected to the second section, such that the protective member and another structure can have a large connection area, improving the connection stability of the protective member.

In some embodiments of the first aspect of this application, the protective member is fixed to the first positive electrode active substance portion.

In the foregoing technical solution, the protective member is fixed to the first positive electrode active substance portion, which facilitates the fixing of the protective member and allows the protective member to better prevent ions released from the first positive electrode active substance portion from moving to the negative electrode winding starting end, reducing the risk of lithium precipitation at the negative electrode winding starting end and improving the safety performance of the battery cell.

In some embodiments of the first aspect of this application, the positive electrode plate further includes a positive electrode winding terminating section located in the flat region, where an end of the positive electrode winding terminating section is a positive electrode winding terminating end of the positive electrode plate; and the negative electrode plate further includes a negative electrode winding terminating section, where an end of the negative electrode winding terminating section forms a negative electrode winding terminating end of the negative electrode plate, and the negative electrode winding terminating section is located on an outer side of the positive electrode winding terminating section.

In the foregoing technical solution, the negative electrode winding terminating section is located on the outer side of the positive electrode winding terminating section, such that the electrode plate at the outermost layer of the electrode assembly is the negative electrode plate, which is conducive to reducing the risk of lithium precipitation in the battery cell.

In some embodiments of the first aspect of this application, the negative electrode active substance layer is provided on a side of the negative electrode winding terminating section facing the winding axis, and the negative electrode active substance layer is not provided on a side of the negative electrode winding terminating section facing away from the winding axis.

In the foregoing technical solution, the negative electrode active substance layer is provided on the side of the negative electrode winding terminating section facing the winding axis of the electrode assembly, and the negative electrode active substance layer is not provided on the side of the negative electrode winding terminating section facing away from the winding axis, which reduces thickness of one negative electrode active substance layer in the electrode assembly, helping increase the volumetric energy density of the battery cell.

In some embodiments of the first aspect of this application, the negative electrode active substance layer is provided on both sides of the negative electrode winding terminating section.

In the foregoing technical solution, the negative electrode active substance layer is provided on both sides of the negative electrode winding terminating section, which can reduce the number of changes in the coating manner of the negative electrode active substance layer or consistently use continuous double-sided coating for the negative electrode active substance layer during manufacturing of the negative electrode plate, helping improve the production efficiency.

In some embodiments of the first aspect of this application, the electrode assembly further includes a second separator, where the second separator is configured to separate the positive electrode plate from the negative electrode plate; where the first separator further includes a first winding terminating section, an end of the first winding terminating section being a first winding terminating end of the first separator, and the second separator further includes a second winding terminating section, an end of the second winding terminating section being a second winding terminating end of the second separator; and the negative electrode plate further includes a negative electrode winding terminating section, where an end of the negative electrode winding terminating section forms a negative electrode winding terminating end of the negative electrode plate; where the first winding terminating section and the second winding terminating section are located on two sides of the negative electrode winding terminating section respectively, the first winding terminating end is flush with the negative electrode winding terminating end, and the second winding terminating end is flush with the negative electrode winding terminating end.

In the foregoing technical solution, the first winding terminating end is flush with the negative electrode winding terminating end, and the second winding terminating end is flush with the negative electrode winding terminating end, such that after the winding of the electrode assembly is completed, the first separator, the second separator, and the negative electrode plate can be cut simultaneously with a double cutter. This improves the winding efficiency. If the first winding terminating end is not flush with the negative electrode winding terminating end and the second winding terminating end is not flush with the negative electrode winding terminating end, the negative electrode plate needs to be cut first, followed by the first separator and the second separator, and the winding tower needs to coordinate with the cutting action at the cutting moment to slow down the speed. In addition, a flush terminating cutting position of the first winding terminating end, the negative electrode winding terminating end, and the second winding terminating end can precisely serve as a flush winding head of the next electrode assembly, that is, as the negative electrode winding starting end, first winding starting end of the first separator, and second winding starting end of the second separator of the next electrode assembly, where the next negative electrode winding starting end, first winding starting end of the first separator, and second winding starting end of the second separator are flush, thereby improving the production efficiency.

In some embodiments of the first aspect of this application, the electrode assembly further includes a positive electrode tab and a negative electrode tab, where the positive electrode tab is riveted to the positive electrode plate; and/or the negative electrode tab is riveted to the negative electrode plate.

In the foregoing technical solution, the positive electrode tab being riveted to the positive electrode plate helps improve the stability of the electrical connection between the positive electrode tab and the positive electrode plate. The negative electrode tab being riveted to the negative electrode plate helps improve the stability of the electrical connection between the negative electrode tab and the negative electrode plate.

In some embodiments of the first aspect of this application, the positive electrode plate includes a positive electrode current collector, where the positive electrode active substance layer on a side of the positive electrode current collector is a first positive electrode active substance layer, and observed along a direction perpendicular to a thickness direction of the positive electrode plate, the first positive electrode active substance layer has a first region located between the positive electrode tab and the positive electrode current collector, the positive electrode tab being riveted to the positive electrode plate in the first region.

In the foregoing technical solution, the first positive electrode active substance layer of the positive electrode plate has the first region located between the positive electrode tab and the positive electrode current collector, and the positive electrode tab is riveted to the positive electrode plate in the first region, such that a mounting slot does not need to be processed on the first positive electrode active substance layer after the coating is completed, or a mounting slot does not need to be reserved on the positive electrode current collector by applying an adhesive tape before the coating. This can improve the production efficiency and reduce the production costs, thereby improving the production efficiency and reducing the costs.

In some embodiments of the first aspect of this application, the positive electrode plate is provided with a first through hole penetrating two sides of the positive electrode plate in the thickness direction, and observed along the thickness direction of the positive electrode plate, the first through hole is located in the first region; and the positive electrode tab has a first body portion and a first riveting portion, where the first region has a first surface facing away from the positive electrode current collector, the positive electrode plate has a second surface opposite the first surface, the first body portion is disposed on the first surface, the first riveting portion protrudes from the first body portion and penetrates the first through hole, and an end of the first riveting portion facing away from the first body portion abuts against the second surface.

In the foregoing technical solution, the first riveting portion of the positive electrode tab protrudes from the first body portion and penetrates the first through hole, and the end of the first riveting portion facing away from the first body portion abuts against the second surface, allowing for convenient connection and reducing the risk of the positive electrode tab falling off the positive electrode plate.

In some embodiments of the first aspect of this application, the negative electrode plate includes a negative electrode current collector, where the negative electrode active substance layer on a side of the negative electrode current collector is a first negative electrode active substance layer, and observed along a direction perpendicular to a thickness direction of the negative electrode plate, the first negative electrode active substance layer has a second region located between the negative electrode tab and the negative electrode current collector, the negative electrode tab being riveted to the negative electrode plate in the second region.

In the foregoing technical solution, the first negative electrode active substance layer of the negative electrode plate has the second region located between the negative electrode tab and the negative electrode current collector, and the negative electrode tab is riveted to the negative electrode plate in the second region, such that a mounting slot does not need to be processed on the first negative electrode active substance layer after the coating is completed, or a mounting slot does not need to be reserved on the negative electrode current collector by applying an adhesive tape before the coating. This can improve the production efficiency and reduce the production costs, thereby improving the production efficiency and reducing the costs.

In some embodiments of the first aspect of this application, the negative electrode plate is provided with a second through hole penetrating two sides of the negative electrode plate in the thickness direction, and observed along the thickness direction of the negative electrode plate, the second through hole is located in the second region; and the negative electrode tab has a second body portion and a second riveting portion, where the second region has a third surface facing away from the negative electrode current collector, the negative electrode plate has a fourth surface opposite the third surface, the second body portion is disposed on the third surface, the second riveting portion protrudes from the second body portion and penetrates the second through hole, and an end of the second riveting portion facing away from the second body portion abuts against the fourth surface.

In the foregoing technical solution, the second riveting portion of the negative electrode tab protrudes from the second body portion and penetrates the second through hole, and the end of the second riveting portion facing away from the second body portion abuts against the fourth surface, allowing for convenient connection and reducing the risk of the negative electrode tab falling off the negative electrode plate.

According to a second aspect, an embodiment of this application provides an electric device including the battery cell according to any one of the embodiments of the first aspect.

### BRIEF DESCRIPTION OF DRAWINGS

To describe the technical solutions in the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a battery cell according to some embodiments of this application;
FIG. 2 is a schematic diagram of a first separator and a second separator being located on two sides of a negative electrode plate and forming a first connection portion and a second connection portion on two sides of the negative electrode plate in an extension direction of a winding axis according to some embodiments of this application;
FIG. 3 is a schematic diagram of a first separator and a second separator being located on two sides of a negative electrode plate and forming a first connection portion and a second connection portion on two sides in an extension direction of a winding axis from another perspective according to some embodiments of this application;
FIG. 4 is a schematic structural diagram of a battery cell according to some other embodiments of this application;
FIG. 5 is a schematic diagram of a first separator and a second separator being located on two sides of a positive electrode plate and forming a first connection portion and a second connection portion on two sides of the positive electrode plate in an extension direction of a winding axis according to some embodiments of this application;
FIG. 6 is a schematic diagram of a first separator and a second separator being located on two sides of a positive electrode plate and forming a first connection portion and a second connection portion on two sides of the positive electrode plate in an extension direction of a winding axis from another perspective according to some embodiments of this application;
FIG. 7 is a schematic diagram of a first separator and a second separator being located on two sides of a negative electrode plate and forming a first connection portion and a second connection portion on two sides of the negative electrode plate in an extension direction of a winding axis from a perspective according to some other embodiments of this application;
FIG. 8 is a schematic diagram of a first separator and a second separator being located on two sides of a positive electrode plate and forming a first connection portion and a second connection portion on two sides of the positive electrode plate in an extension direction of a winding axis from a perspective according to some other embodiments of this application;
FIG. 9 is a schematic structural diagram of a battery cell according to still some other embodiments of this application;
FIG. 10 is a schematic diagram of a positive electrode plate in an unfolded state being riveted to a positive electrode tab according to some embodiments of this application;
FIG. 11 is a schematic diagram of a positive electrode tab being disposed on a side of a first region facing away from a positive electrode current collector according to some embodiments of this application;
FIG. 12 is a schematic diagram of a punch needle not penetrating a positive electrode tab and a positive electrode plate;
FIG. 13 is a schematic diagram of a punch needle penetrating a positive electrode tab and a positive electrode plate;
FIG. 14 is a schematic diagram of fitting between a positive electrode tab and a positive electrode plate with a punch needle pulled out;
FIG. 15 is a schematic diagram of a positive electrode tab being riveted to a positive electrode plate in a first region;
FIG. 16 is a schematic diagram of a punch needle not penetrating a positive electrode tab and a positive electrode plate according to some other embodiments of this application;
FIG. 17 is a schematic diagram of a punch needle penetrating a positive electrode tab and a positive electrode plate according to some other embodiments of this application;
FIG. 18 is a schematic diagram of fitting between a positive electrode tab and a positive electrode plate with a punch needle pulled out according to some other embodiments of this application;
FIG. 19 is a schematic diagram of a positive electrode tab being riveted to a positive electrode plate in a first region according to some other embodiments of this application;
FIG. 20 is an exploded view of a positive electrode tab and a positive electrode plate according to still some other embodiments of this application;
FIG. 21 is a schematic diagram of a first riveting portion being inserted in a first through hole of a positive electrode plate according to still some other embodiments of this application;
FIG. 22 is a schematic diagram of a positive electrode tab being riveted to a positive electrode plate in a first region according to still some other embodiments of this application;
FIG. 23 is a schematic diagram of a rivet penetrating a positive electrode tab and a positive electrode plate;
FIG. 24 is a schematic diagram of a positive electrode tab being riveted to a positive electrode plate by a first rivet;
FIG. 25 is a schematic diagram of a negative electrode plate in an unfolded state being riveted to a negative electrode tab according to some embodiments of this application;
FIG. 26 is a schematic diagram of a negative electrode tab being riveted to a negative electrode plate according to some embodiments of this application; and
FIG. 27 is a schematic diagram of a negative electrode tab being riveted to a negative electrode plate by a second rivet according to some embodiments of this application.

Reference signs: 100. battery cell; 10. electrode assembly; 10a. flat region; 10b. first bent region; 10c. second bent region; 11. positive electrode plate; 111. first bent section; 112. positive electrode winding starting section; 1121. positive electrode winding starting end; 113. first flat section; 114. positive electrode current collector; 1141. second substrate section; 1142. third substrate section; 1143. fifth substrate section; 115. positive electrode active substance layer; 115a. first positive electrode active substance layer; 115a1. first region; 115b. second positive electrode active substance layer; 1151. first positive electrode active substance portion; 1152. first through hole; 1153. first surface; 1154. second surface; 116. positive electrode winding terminating section; 1161. positive electrode winding terminating end; 12. negative electrode plate; 121. negative electrode winding starting section; 1211. negative electrode winding starting end; 122. negative electrode current collector; 1221. first substrate section; 1222. fourth substrate section; 1223. sixth substrate section; 123. negative electrode active substance layer; 123a. first negative electrode active substance layer; 123a1. second region; 123b. second negative electrode active substance layer; 1231. second through hole; 1232. third surface; 1233. fourth surface; 124. third bent section; 125. second flat section; 126. negative electrode winding terminating section; 1261. negative electrode winding terminating end; 13. first separator; 131. first winding starting section; 1311. first winding starting end; 132. first winding terminating section; 1321. first winding terminating end; 14. second separator; 141. second winding starting section; 1411. second winding starting end; 142. second winding terminating section; 1421. second winding terminating end; 15. positive electrode tab; 151. first body portion; 152. first riveting portion; 1521. first limiting portion; 16. negative electrode tab; 161. second body portion; 162. second riveting portion; 1621. second limiting portion; 20. protective member; 21. first section; 22. second section; Q1. first connection portion; Q2. second connection portion; 200. punch needle; 300. first rivet; 310. first limiting structure; 400. second rivet; 410. second limiting structure; X. first direction; Y second direction; Z. extension direction of winding axis; Z1. width direction; K. length direction; and M. thickness direction.

### DESCRIPTION OF EMBODIMENTS

To make the objectives, technical solutions, and advantages in embodiments of this application clearer, the following clearly and completely describes the technical solutions in some embodiments of this application with reference to the accompanying drawings in some embodiments of this application. Apparently, the described embodiments are some but not all of the embodiments of this application. Generally, the components in some embodiments of this application as described and illustrated in the accompanying drawings herein can be arranged and designed in a variety of configurations.

Therefore, the following detailed description of some embodiments of this application as provided in the accompanying drawings is not intended to limit the protection scope of this application but merely to represent selected embodiments of this application. All other embodiments obtained by persons of ordinary skill in the art based on some embodiments of this application without creative efforts shall fall within the protection scope of this application.

It should be noted that in absence of conflicts, some embodiments and features in some embodiments in this application may be combined with each other.

It should be noted that similar reference signs and letters indicate similar items in the following drawings, and therefore once an item is defined in one drawing, it does not need to be further defined or explained in the subsequent drawings.

In the description of some embodiments of this application, it should be noted that the orientations or positional relationships as indicated are orientations or positional relationships based on the accompanying drawings, or conventional orientations or positional relationships of products of this application in use, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore shall not be construed as any limitations on this application. In addition, the terms "first", "second", "third", and the like are merely intended for distinguishing purposes and shall not be understood as any indication or implication of relative importance.

In this application, being "flush" does not mean being absolutely flush. Considering equipment tolerance fluctuations, A being flush with B in this application means that an error distance of 0-5 mm may be present between A and B.

Currently, from the perspective of market development, battery cells have been increasingly widely used. Battery cells have been widely used in many fields such as electric transportation tools including electric bicycles, electric motorcycles, and electric vehicles, electric tools, unmanned aerial vehicles, and energy storage devices. With continuous expansion of application fields of battery cells, market demands for battery cells are also increasing.

A battery cell includes an electrode assembly. The electrode assembly includes a separator, a positive electrode plate, and a negative electrode plate. Working of the electrode assembly relies on migration of metal ions between the positive electrode plate and the negative electrode plate. The cycling process of the battery cell involves metal ions moving from the positive electrode plate to the negative electrode plate and then from the negative electrode plate to the positive electrode plate.

During winding of the electrode assembly, the positive electrode plate and negative electrode plate of the electrode assembly have the same winding direction. It can be understood that a positive electrode winding starting end of the positive electrode plate and a negative electrode winding starting end of the negative electrode plate face the same direction. An electrode plate at the innermost ring of the electrode assembly is the negative electrode plate. Because the negative electrode plate at the innermost ring has a positive electrode plate opposite the negative electrode plate only on a side facing away from a winding axis, the negative electrode plate at the innermost layer has a negative electrode active substance layer only on the side facing away from the winding axis, and the negative electrode plate at the innermost layer forms an uncoated region on a side facing the winding axis. Consequently, a negative electrode current collector of the negative electrode plate cannot be fully utilized. During manufacturing of the negative electrode plate, if a winding starting section of the negative electrode plate is coated with the negative electrode active substance layer on one side, the coating manner needs to be changed, which severely affects coating efficiency, thereby affecting production efficiency. When the electrode assembly is formed through winding, generally, the positive electrode plate and the negative electrode plate are wound and extend in the same direction, and the separator is wound first. A winding length of the separator is longer than a length of the negative electrode plate, and a winding starting end of the separator extends beyond the negative electrode winding starting end of the negative electrode plate. A winding length of the negative electrode plate is longer than the positive electrode plate, and the negative electrode winding starting end of the negative electrode plate extends beyond the positive electrode winding starting end of the positive electrode plate. Such winding manner reduces the production efficiency of the battery cell.

Based on the foregoing considerations, to alleviate the problem of low production efficiency of the battery cell, some embodiments of this application provide a battery cell. The battery cell includes an electrode assembly, where the electrode assembly is a wound structure, and the electrode assembly includes a flat region and a first bent region, in a first direction, the first bent region being connected to an end of the flat region; and the electrode assembly includes a negative electrode plate, a positive electrode plate, and a first separator, the first separator being configured to separate the positive electrode plate from the negative electrode plate. The positive electrode plate includes a first bent section located in the first bent region and a positive electrode winding starting section and first flat section located in the flat region, where in a second direction, the positive electrode winding starting section is disposed opposite the first flat section, the first flat section and the positive electrode winding starting section are connected to two ends of the first bent section respectively, and an end of the positive electrode winding starting section facing away from the first bent section is a positive electrode winding starting end of the positive electrode plate. The negative electrode plate includes a negative electrode winding starting section, where the negative electrode winding starting section is located in the flat region, in the second direction, the negative electrode winding starting section is located between the positive electrode winding starting section and the first flat section, and in the first direction, an end of the negative electrode winding starting section facing the first bent section is a negative electrode winding starting end of the negative electrode plate. Negative electrode active substance layers on two sides of the negative electrode winding starting section are disposed opposite a positive electrode active substance layer on the positive electrode winding starting section and a positive electrode active substance layer on the first flat section respectively. The first separator has a first winding starting end, where the first winding starting end is flush with the positive electrode winding starting end, or the first winding starting end is flush with the negative electrode winding starting end. An extension direction of a winding axis, the first direction, and the second direction of the electrode assembly are perpendicular to each other.

The two ends of the first wound and bent section, namely the first bent section, of the positive electrode plate are connected to the positive electrode winding starting section and the first flat section respectively, and the negative electrode active substance layers on the two sides of the negative electrode winding starting section are disposed opposite the positive electrode active substance layer on the positive electrode winding starting section and the positive electrode active substance layer on the first flat section respectively, meaning that the negative electrode active substance layer is provided on both sides of the negative electrode winding starting section. This reduces the number of changes in the coating manner of the negative electrode active substance layer or consistently uses continuous double-sided coating for the negative electrode active substance layer during manufacturing of the negative electrode plate, helping improve the production efficiency.

The first winding starting end of the first separator is flush with the positive electrode winding starting end, so the first separator and the positive electrode plate can be wound synchronously, or the first winding starting end is flush with the negative electrode winding starting end, so the first separator and the negative electrode plate can be wound synchronously, thereby further improving the production efficiency.

The negative electrode active substance layers on the two sides of the negative electrode winding starting section are disposed opposite the positive electrode active substance layer on the positive electrode winding starting section and the positive electrode active substance layer on the first flat section respectively, which also helps increase energy density of the battery cell.

The battery cell disclosed in these embodiments of this application may be used without limitation in an electric device such as an electric two-wheeler, an electric tool, an unmanned aerial vehicle, or an energy storage device. A battery cell with working conditions of this application may alternatively be used as a power supply system of the electric device, which is conducive to increasing the energy density of the battery cell.

An embodiment of this application provides an electric device that uses a battery cell as a power source. The electric device may be but is not limited to an electronic device, an electric tool, an electric transportation tool, an unmanned aerial vehicle, or an energy storage device. The electronic device may include a mobile phone, a tablet computer, a notebook computer, or the like, the electric tool may include an electric drill, an electric saw, or the like, and the electric transportation tool may include an electric vehicle, an electric motorcycle, an electric bicycle, or the like.

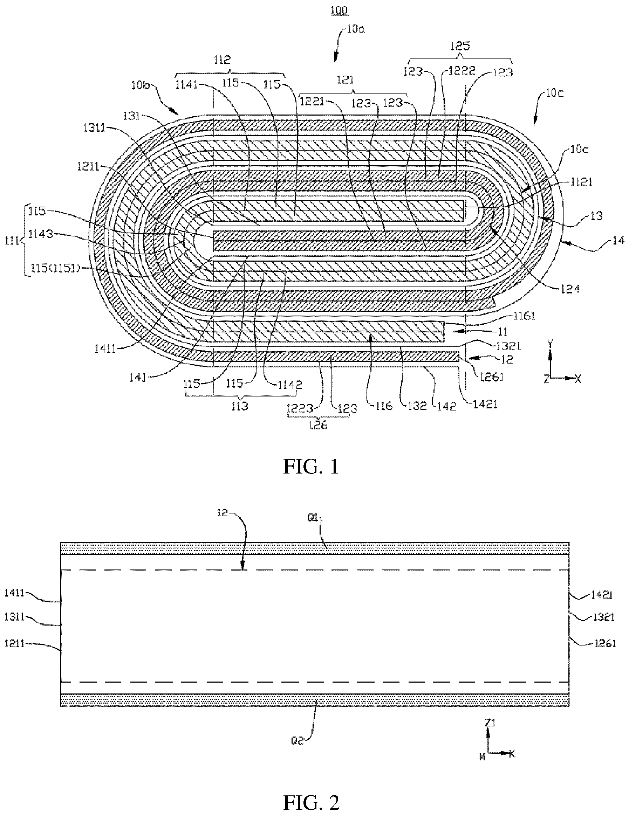

As shown in FIG. 1, some embodiments of this application provide a battery cell 100. The battery cell 100 includes an electrode assembly 10, where the electrode assembly 10 is a wound structure, and the electrode assembly 10 includes a flat region 10a and a first bent region 10b, in a first direction X, the first bent region 10b being connected to an end of the flat region 10a; and the electrode assembly 10 includes a positive electrode plate 11, a negative electrode plate 12, and a first separator 13, the first separator 13 being configured to separate the positive electrode plate 11 from the negative electrode plate 12. The positive electrode plate 11 includes a first bent section 111 located in the first bent region 10b and a positive electrode winding starting section 112 and first flat section 113 located in the flat region 10a, where in a second direction Y, the positive electrode winding starting section 112 is disposed opposite the first flat section 113, the first flat section 113 and the positive electrode winding starting section 112 are connected to two ends of the first bent section 111 respectively, and an end of the positive electrode winding starting section 112 facing away from the first bent section 111 is a positive electrode winding starting end 1121 of the positive electrode plate 11. The negative electrode plate 12 includes a negative electrode winding starting section 121, where the negative electrode winding starting section 121 is located in the flat region 10a, in the second direction Y, the negative electrode winding starting section 121 is located between the positive electrode winding starting section 112 and the first flat section 113, and in the first direction X, an end of the negative electrode winding starting section 121 facing the first bent section 111 is a negative electrode winding starting end 1211 of the negative electrode plate 12. Negative electrode active substance layers 123 on two sides of the negative electrode winding starting section 121 are disposed opposite a positive electrode active substance layer 115 on the positive electrode winding starting section 112 and a positive electrode active substance layer 115 on the first flat section 113 respectively. The first separator 13 has a first winding starting end 1311, where the first winding starting end 1311 is flush with the positive electrode winding starting end 1121, or the first winding starting end 1311 is flush with the negative electrode winding starting end 1211. An extension direction Z of a winding axis, the first direction X, and the second direction Y of the electrode assembly 10 are perpendicular to each other.

The positive electrode plate 11 includes a positive electrode current collector 114 and the positive electrode active substance layer 115. The positive electrode active substance layer 115 may be provided on both sides of the positive electrode current collector 114 at any position in a winding direction of the positive electrode plate 11, so during manufacturing of the positive electrode plate 11, continuous double-sided coating can be used, which is conducive to improving the coating efficiency, thereby improving the production efficiency.

The positive electrode active substance layer 115 may be provided on both sides of the positive electrode current collector 114 in some regions in the winding direction of the positive electrode plate 11, and the positive electrode active substance layer 115 may be provided on only one side of the positive electrode current collector 114 in the other regions in the winding direction of the positive electrode plate 11, so double-sided coating is used in some regions of the positive electrode current collector 114 and single-sided coating is used in the other regions. The coating manner is changed according to actual needs, which is referred to as gap coating.

The battery cell 100 being a lithium-ion battery is used as an example, for which, the positive electrode current collector 114 may be made of aluminum, and the positive electrode active substance layer 115 may be made of lithium cobalt oxide, lithium iron phosphate, ternary lithium, lithium manganate oxide, or the like.

The first bent section 111 is the first wound and bent section formed during winding of the positive electrode plate 11. The first bent section 111 is the electrode plate at the innermost layer of the first bent region 10b. The positive electrode winding starting section 112 and the first flat section 113 are both located in the flat region 10a. The positive electrode winding starting section 112 and the first flat section 113 are connected to two ends of the first bent section 111 in the winding direction of the positive electrode plate 11 respectively. The positive electrode winding starting section 112 is a starting section of winding of the positive electrode plate 11, and the positive electrode winding starting end 1121 is an end portion, located inside the electrode assembly 10, of the positive electrode plate 11 in the winding direction of the positive electrode plate 11. The end of the positive electrode winding starting section 112 facing away from the first bent section 111 in the first direction X is the positive electrode winding starting end 1121.

The negative electrode plate 12 includes a negative electrode current collector 122 and the negative electrode active substance layer 123. The negative electrode active substance layer 123 may be provided on both sides of the negative electrode current collector 122 at any position in a winding direction of the negative electrode plate 12, so during manufacturing of the negative electrode plate 12, continuous double-sided coating can be used, which is conducive to improving the coating efficiency, thereby improving the production efficiency.

The negative electrode active substance layer 123 may be provided on both sides of the negative electrode current collector 122 in some regions in the winding direction of the negative electrode plate 12, and the negative electrode active substance layer 123 may be provided on only one side of the negative electrode current collector 122 in the other regions in the winding direction of the negative electrode plate 12, so double-sided coating is used in some regions of the negative electrode current collector 122 and single-sided coating is used in the other regions. The coating manner is changed according to actual needs, which is referred to as gap coating.

The battery cell 100 being a lithium-ion battery is used as an example, for which, the negative electrode current collector 122 may be made of copper, and the negative electrode active substance layer 123 may be made of carbon, silicon, or the like.

The negative electrode winding starting section 121 is a starting section of winding of the negative electrode plate 12, and the negative electrode winding starting end 1211 is an end portion, located inside the electrode assembly 10, of the negative electrode plate 12 in the winding direction of the negative electrode plate 12. In the first direction X, the negative electrode winding starting end 1211 faces the first bent section 111. Observed along the second direction Y, a connection position between the flat region 10a and the first bent region 10b may overlap with the negative electrode winding starting end 1211. Certainly, observed along the second direction Y, the connection position between the flat region 10a and the first bent region 10b may alternatively not overlap with the negative electrode winding starting end 1211, meaning that the negative electrode winding starting end 1211 is located in the first bent region 10b or the negative electrode winding starting end 1211 is located in the flat region 10a.

In the second direction Y, the negative electrode winding starting section 121 is disposed between the positive electrode winding starting section 112 and the first flat section 113. Observed along the second direction Y, the positive electrode winding starting section 112 and the negative electrode winding starting section 121 overlap, and the first flat section 113 and the negative electrode winding starting section 121 overlap.

The negative electrode current collector 122 includes a first substrate section 1221 located in the flat region 10a, where an end of the first substrate section 1221 is located at the negative electrode winding starting end 1211, and in the second direction Y, the negative electrode active substance layer 123 is provided on both sides of the first substrate section 1221. The first substrate section 1221 and the negative electrode active substance layers 123 on the two sides of the first substrate section 1221 jointly form the negative electrode winding starting section 121, such that the negative electrode active substance layer 123 is provided on both sides of the negative electrode winding starting section 121 in the second direction Y. An end of the negative electrode active substance layers 123 on the two sides of the first substrate section 1221 is located at the negative electrode winding starting end 1211.

The positive electrode current collector 114 includes a second substrate section 1141 located in the flat region 10a, where an end of the second substrate section 1141 is located at the positive electrode winding starting end 1121, and in the second direction Y, the positive electrode active substance layer 115 is provided on a side of the second substrate section 1141 facing the negative electrode winding starting section 121. The positive electrode winding starting section 112 includes the second substrate section 1141 and the positive electrode active substance layer 115 disposed on the side of the second substrate section 1141 facing the negative electrode winding starting section 121.

The positive electrode current collector 114 further includes a third substrate section 1142 located in the flat region 10a, where in the second direction Y, the positive electrode active substance layer 115 is provided on a side of the third substrate section 1142 facing the negative electrode winding starting section 121. The first flat section 113 includes the third substrate section 1142 and the positive electrode active substance layer 115 disposed on the side of the third substrate section 1142 facing the negative electrode winding starting section 121.

The negative electrode active substance layers 123 on the two sides of the negative electrode winding starting section 121 are disposed opposite the positive electrode active substance layer 115 on a side of the positive electrode winding starting section 112 facing the negative electrode winding starting section 121 and the positive electrode active substance layer 115 on a side of the first flat section 113 facing the negative electrode winding starting section 121 respectively.

The two ends of the first wound and bent section, namely the first bent section 111, of the positive electrode plate 11 are connected to the positive electrode winding starting section 112 and the first flat section 113 respectively, and the negative electrode active substance layers 123 on the two sides of the negative electrode winding starting section 121 are disposed opposite the positive electrode active substance layer 115 on the positive electrode winding starting section 112 and the positive electrode active substance layer 115 on the first flat section 113 respectively, meaning that the negative electrode active substance layer 123 is provided on both sides of the negative electrode winding starting section 121. This reduces the number of changes in the coating manner of the negative electrode active substance layer 123 or consistently uses continuous double-sided coating for the negative electrode active substance layer 123 during manufacturing of the negative electrode plate 12, helping improve the production efficiency.

The negative electrode active substance layers 123 on the two sides of the negative electrode winding starting section 121 are disposed opposite the positive electrode active substance layer 115 on the positive electrode winding starting section 112 and the positive electrode active substance layer 115 on the first flat section 113 respectively, which also helps increase the energy density of the battery cell 100.

The first separator 13 may be made of PP (polypropylene, polypropylene), PE (polyethylene, polyethylene), or the like. The first winding starting end 1311 is a starting end portion of winding of the first separator 13. The first winding starting end 1311 may be flush with the positive electrode winding starting end 1121. It should be noted that in the embodiment where the first winding starting end 1311 is flush with the positive electrode winding starting end 1121, the first winding starting end 1311 may not be absolutely flush with the positive electrode winding starting end 1121. Considering equipment tolerance fluctuations, in the first direction X, an error distance of 0 mm to 0.5 mm may be present between the first winding starting end 1311 and the positive electrode winding starting end 1121. In other words, in the first direction X, a length by which the first winding starting end 1311 extends beyond the positive electrode winding starting end 1121 is 0 mm to 0.5 mm, or in the first direction X, a length by which the positive electrode winding starting end 1121 extends beyond the first winding starting end 1311 is 0 mm to 0.5 mm.

The first winding starting end 1311 may be flush with the negative electrode winding starting end 1211. It should be noted that in the embodiment where the first winding starting end 1311 is flush with the negative electrode winding starting end 1211, the first winding starting end 1311 may not be absolutely flush with the negative electrode winding starting end 1211. Considering equipment tolerance fluctuations, in the first direction X, an error distance of 0 mm to 0.5 mm may be present between the first winding starting end 1311 and the negative electrode winding starting end 1211. In other words, in the first direction X, a length by which the first winding starting end 1311 extends beyond the negative electrode winding starting end 1211 is 0 mm to 0.5 mm, or in the first direction X, a length by which the negative electrode winding starting end 1211 extends beyond the first winding starting end 1311 is 0 mm to 0.5 mm.

The first winding starting end 1311 of the first separator 13 is flush with the positive electrode winding starting end 1121, so the first separator 13 and the positive electrode plate 11 can be wound synchronously, or the first winding starting end 1311 is flush with the negative electrode winding starting end 1211, so the first separator 13 and the negative electrode plate 12 can be wound synchronously, thereby further improving the production efficiency.

In some embodiments, the electrode assembly 10 further includes a second bent region 10c, in the first direction X, the second bent region 10c being located on a side of the flat region 10a facing away from the first bent region 10b; and the negative electrode plate 12 further includes a second bent section 124 located in the second bent region 10c and a second flat section 125 located in the flat region 10a, where in the second direction Y, the second flat section 125 is disposed opposite the negative electrode winding starting section 121, and the second flat section 125 and the negative electrode winding starting section 121 are connected to two ends of the second bent section 124 respectively; where positive electrode active substance layers 115 on two sides of the positive electrode winding starting section 112 are disposed opposite the negative electrode active substance layer 123 on the negative electrode winding starting section 121 and a negative electrode active substance layer 123 on the second flat section 125 respectively.

The second bent region 10c is located on the side of the flat region 10a facing away from the first bent region 10b and is connected to an end of the flat region 10a.

The second bent section 124 is the first wound and bent section formed during winding of the negative electrode plate 12. The second bent section 124 is the negative electrode plate 12 at the innermost layer of the second bent region 10c. The negative electrode winding starting section 121 and the second flat section 125 are both located in the flat region 10a. The negative electrode winding starting section 121 and the second flat section 125 are connected to two ends of the second bent section 124 in the winding direction of the negative electrode plate 12 respectively. The negative electrode winding starting section 121 is a starting section of winding of the negative electrode plate 12, and the negative electrode winding starting end 1211 is an end portion, located inside the electrode assembly 10, of the negative electrode plate 12 in the winding direction of the negative electrode plate 12. An end of the negative electrode winding starting section 121 facing away from the second bent section 124 in the first direction X is the negative electrode winding starting end 1211. A direction in which the negative electrode winding starting section 121 faces away from the second bent section 124 is opposite a direction in which the positive electrode winding starting section 112 faces away from the first bent section 111. In the first direction X, the positive electrode winding starting end 1121 faces the second bent section 124, and the negative electrode winding starting end 1211 faces the first bent section 111, so the positive electrode plate 11 and the negative electrode plate 12 have opposite winding directions.

It should be noted that the positive electrode plate 11 and the negative electrode plate 12 having opposite winding directions means that the positive electrode winding starting end 1121 of the positive electrode plate 11 and the negative electrode winding starting end 1211 of the negative electrode plate 12 face opposite directions. In these embodiments, the positive electrode winding starting end 1121 of the positive electrode plate 11 faces the second bent section 124 located in the second bent region 10c, and the negative electrode winding starting end 1211 of the negative electrode plate 12 faces the first bent section 111 located in the first bent region 10b.

Observed along the second direction Y, a connection position between the flat region 10a and the second bent region 10c may overlap with the positive electrode winding starting end 1121. Certainly, observed along the second direction Y, the connection position between the flat region 10a and the second bent region 10c may alternatively not overlap with the positive electrode winding starting end 1121, meaning that the positive electrode winding starting end 1121 is located in the second bent region 10c or the positive electrode winding starting end 1121 is located in the flat region 10a.

In the second direction Y, the positive electrode winding starting section 112 is disposed between the negative electrode winding starting section 121 and the second flat section 125. Observed along the second direction Y, the negative electrode winding starting section 121 and the positive electrode winding starting section 112 overlap, and the second flat section 125 and the positive electrode winding starting section 112 overlap. In the second direction Y, the positive electrode active substance layer 115 is provided on a side of the second substrate section 1141 facing the second flat section 125. The second substrate section 1141, the positive electrode active substance layer 115 disposed on the side of the second substrate section 1141 facing the negative electrode winding starting section 121, and the positive electrode active substance layer 115 disposed on the side of the second substrate section 1141 facing the second flat section 125 jointly form the positive electrode winding starting section 112. It can be understood that in the second direction Y, the positive electrode active substance layer 115 is provided on both sides of the positive electrode winding starting section 112. The negative electrode current collector 122 further includes a fourth substrate section 1222 located in the flat region 10a, where in the second direction Y, the negative electrode active substance layer 123 is provided on a side of the fourth substrate section 1222 facing the positive electrode winding starting section 112. The second flat section 125 includes the fourth substrate section 1222 and the negative electrode active substance layer 123 disposed on the side of the fourth substrate section 1222 facing the positive electrode winding starting section 112.

The positive electrode active substance layers 115 on the two sides of the positive electrode winding starting section 112 are disposed opposite the negative electrode active substance layer 123 on a side of the negative electrode winding starting section 121 facing the positive electrode winding starting section 112 and the negative electrode active substance layer 123 on a side of the second flat section 125 facing the positive electrode winding starting section 112 respectively.

The positive electrode active substance layers 115 on the two sides of the positive electrode winding starting section 112 are disposed opposite the negative electrode active substance layer 123 on the negative electrode winding starting section 121 and the negative electrode active substance layer 123 on the second flat section 125 respectively, meaning that the positive electrode active substance layer 115 is provided on both sides of the positive electrode winding starting section 112. This not only is conducive to increasing the energy density of the battery cell 100, but also can reduce the number of changes in the coating manner or consistently use continuous double-sided coating during manufacturing of the positive electrode plate 11, helping improve the production efficiency.

In some embodiments, in a winding direction of the electrode assembly 10, the negative electrode active substance layer 123 is provided on both sides of the negative electrode plate 12 at any position; and/or in the winding direction of the electrode assembly 10, the positive electrode active substance layer 115 is provided on both sides of the positive electrode plate 11 at any position.

The negative electrode active substance layer 123 being provided on both sides of the negative electrode plate 12 at any position actually means that the negative electrode active substance layer 123 is provided on both sides of the negative electrode current collector 122 of the negative electrode plate 12 at any position in the winding direction. The positive electrode active substance layer 115 being provided on both sides of the positive electrode plate 11 at any position actually means that the positive electrode active substance layer 115 is provided on both sides of the positive 114 electrode current collector 122 of the positive electrode plate 11 at any position in the winding direction. This may be that only the negative electrode active substance layer 123 is provided on both sides of the negative electrode plate 12 at any position in the winding direction, or only the positive electrode active substance layer 115 is provided on both sides of the positive electrode plate 11 at any position in the winding direction. This may alternatively be that the negative electrode active substance layer 123 is provided on both sides of the negative electrode plate 12 at any position in the winding direction, and the positive electrode active substance layer 115 is provided on both sides of the positive electrode plate 11 at any position in the winding direction.

In the winding direction of the electrode assembly 10, the negative electrode active substance layer 123 is provided on both sides of the negative electrode plate 12 at any position, so during manufacturing of the negative electrode plate 12, continuous double-sided coating can be used to form the negative electrode plate 12. This reduces the number of changes in the coating manner of the negative electrode active substance layer 123 or consistently uses continuous double-sided coating for the negative electrode active substance layer 123 during manufacturing of the negative electrode plate 12, helping improve the production efficiency. In the winding direction of the electrode assembly 10, the positive electrode active substance layer 115 is provided on both sides of the positive electrode plate 11 at any position, so during manufacturing of the positive electrode plate 11, continuous double-sided coating can be used to form the positive electrode plate 11. This reduces the number of changes in the coating manner of the positive electrode active substance layer 115 or consistently uses continuous double-sided coating for the positive electrode active substance layer 115 during manufacturing of the positive electrode plate 11, helping improve the production efficiency.

As shown in FIG. 1 to FIG. 3, in some embodiments, the electrode assembly 10 further includes a second separator 14, where the second separator 14 is configured to separate the positive electrode plate 11 from the negative electrode plate 12, and the first separator 13 and the second separator 14 are located on two sides of the negative electrode plate 12 respectively; where the first separator 13 and the second separator 14 are connected to form a first connection portion Q1 and a second connection portion Q2, and in the extension direction Z of the winding axis, the first connection portion Q1 and the second connection portion Q2 are located on two sides of the negative electrode plate 12 respectively.

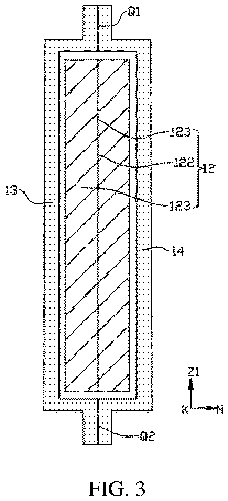

The second separator 14 may be made of PP, PE, or the like. The first separator 13 and the second separator 14 may be made of the same or different materials. The first separator 13 and the second separator 14 are both configured to insulate the positive electrode plate 11 from the negative electrode plate 12. In the extension direction Z of the winding axis, two ends of the first separator 13 extend beyond two ends of the negative electrode plate 12, and two ends of the second separator 14 extend beyond the two ends of the negative electrode plate 12. Portions of the first separator 13 extending beyond the two ends of the negative electrode plate 12 are connected to portions of the second separator 14 extending beyond the negative electrode plate 12 to form the first connection portion Q1 and the second connection portion Q2, such that the first connection portion Q1 and the second connection portion Q2 are located on the two sides of the negative electrode plate 12 in the extension direction Z of the winding axis. As shown in FIG. 2 and FIG. 3, the first separator 13 and the second separator 14 are located on the two sides of the negative electrode plate 12 in a thickness direction M, and when the first separator 13, the second separator 14, and the negative electrode plate 12 are in an unfolded state, the first connection portion Q1 and the second connection portion Q2 are located on the two sides of the negative electrode plate 12 in a width direction Z1. When the negative electrode plate 12 is in a wound state, the extension direction Z of the winding axis is parallel to the width direction Z1 of the negative electrode plate 12. The first connection portion Q1 and the second connection portion Q2 can extend along a length direction K of the negative electrode plate 12. The length direction K of the negative electrode plate 12 in the unfolded state corresponds to the winding direction of the negative electrode plate 12 in the wound state.

The first separator 13 and the second separator 14 are connected to form the first connection portion Q1 and the second connection portion Q2. The first separator 13 and the second separator 14 have a small space to move relative to the negative electrode plate 12 or the first separator 13 and the second separator 14 cannot move relative to the negative electrode plate 12, which reduces the risk of displacement of the first separator 13 and the second separator 14. In addition, the first separator 13 and the second separator 14 are connected, providing a binding force between the first separator 13 and the second separator 14, which reduces the risks of wrinkles and shrinkage of the first separator 13 and the second separator 14, thereby reducing the risk of short circuits in the battery cell 100. The first connection portion Q1 and the second connection portion Q2 are located on the two sides of the negative electrode plate 12 in the extension direction Z of the winding axis respectively, facilitating the connection of the first separator 13 and the second separator 14.

The positions where the first separator 13 and the second separator 14 are connected to form the first connection portion Q1 and the second connection portion Q2 may be any positions in the winding direction, for example, the portions of the first separator 13 and the second separator 14 located on two sides of the second flat section 125 are connected to form the first connection portion Q1 and the second connection portion Q2, or the portions of the first separator 13 and the second separator 14 located on two sides of the second bent section 124 are connected to form the first connection portion Q1 and the second connection portion Q2.

Still referring to FIG. 1, in some embodiments, the first separator 13 has a first winding starting section 131 located in the flat region 10a, an end of the first winding starting section 131 being the first winding starting end 1311 of the first separator 13, and the second separator 14 has a second winding starting section 141 located in the flat region 10a, an end of the second winding starting section 141 being a second winding starting end 1411 of the second separator 14, where in the second direction Y, the first winding starting section 131 and the second winding starting section 141 are located on two sides of the negative electrode winding starting section 121 respectively; where the first winding starting section 131 and the second winding starting section 141 are connected to form the first connection portion Q1 and the second connection portion Q2, and in the extension direction Z of the winding axis, the first connection portion Q1 and the second connection portion Q2 are located on two sides of the negative electrode winding starting section 121 respectively.

The first winding starting section 131 is the first section of the first separator 13 to participate in the winding. The second winding starting section 141 is the first section of the second separator 14 to participate in the winding. The first winding starting section 131 and the second winding starting section 141 are both located in the flat region 10a and are located on the two sides of the negative electrode winding starting section 121 in the second direction Y respectively.

The first winding starting section 131 of the first separator 13 and the second winding starting section 141 of the second separator 14 are connected, and the first separator 13 and the second separator 14 are connected at the winding starting positions to form the first connection portion Q1 and the second connection portion Q2. This not only facilitates the connection of the first separator 13 and the second separator 14, but also can reduce the risks of displacement, wrinkles, and shrinkage of the first separator 13 and the second separator 14 during the winding and after the winding of the electrode assembly 10 is completed, reducing the risk of short circuits in the battery cell 100, thereby improving the quality of the battery cell 100.

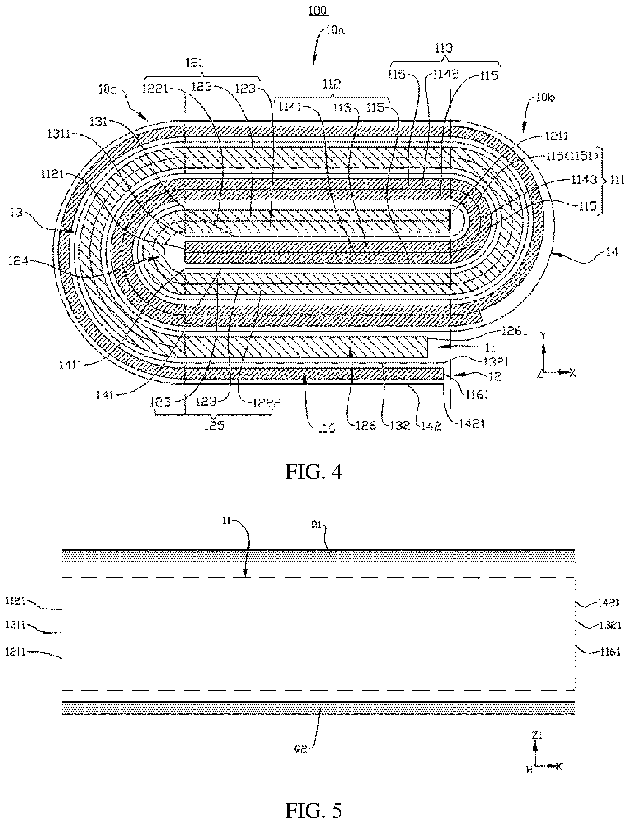

As shown in FIG. 4 to FIG. 6, in some other embodiments, the first separator 13 and the second separator 14 may be located on two sides of the positive electrode plate 11 respectively; where the first separator 13 and the second separator 14 are connected to form a first connection portion Q1 and a second connection portion Q2, and in the extension direction Z of the winding axis, the first connection portion Q1 and the second connection portion Q2 are located on two sides of the positive electrode plate 11 respectively.

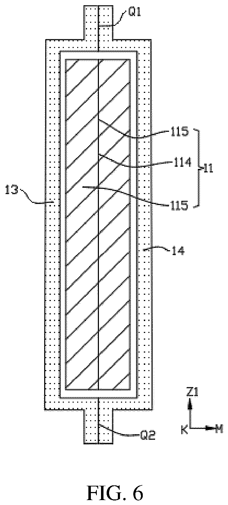

As shown in FIG. 5 and FIG. 6, the first separator 13 and the second separator 14 are located on the two sides of the positive electrode plate 11 in a thickness direction M, and when the first separator 13, the second separator 14, and the positive electrode plate 11 are in an unfolded state, the first connection portion Q1 and the second connection portion Q2 are located on the two sides of the positive electrode plate 11 in a width direction Z1. When the positive electrode plate 11 is in a wound state, the extension direction Z of the winding axis is parallel to the width direction Z1 of the positive electrode plate 11. The first connection portion Q1 and the second connection portion Q2 can extend along a length direction K of the positive electrode plate 11. The length direction K of the positive electrode plate 11 in the unfolded state corresponds to the winding direction of the positive electrode plate 11 in the wound state.

The first winding starting section 131 of the first separator 13 and the second winding starting section 141 of the second separator 14 are located on two sides of the positive electrode winding starting section 112 respectively, and the first winding starting section 131 and the second winding starting section 141 are connected to form the first connection portion Q1 and the second connection portion Q2 located on the two sides of the positive electrode plate 11 in the extension direction Z of the winding axis respectively.

The structures of the first separator 13 and the second separator 14 include a base film and an adhesive layer, where at least one side of the base film is provided with the adhesive layer. The first separator 13 includes a first base film (not shown in the figure) and a first adhesive layer (not shown in the figure), and the second separator 14 includes a second base film (not shown in the figure) and a second adhesive layer (not shown in the figure).

The first separator 13 and the second separator 14 may be connected through thermal lamination, so that the first adhesive layer of the first separator 13 and the second adhesive layer of the second separator 14 are adhered together to form the first connection portion Q1 and the second connection portion Q2.

In some other embodiments, the first separator 13 and the second separator 14 may alternatively be thermally laminated with the electrode plates as a whole. The first separator 13 includes a first base film and a first adhesive layer, where at least one side of the first base film is provided with the first adhesive layer, and the positive electrode plate 11 or the negative electrode plate 12 is adhered to the first base film through the first adhesive layer; and the second separator 14 includes a second base film and a second adhesive layer, where at least one side of the second base film is provided with the second adhesive layer, and the positive electrode plate 11 or the negative electrode plate 12 is adhered to the second base film through the second adhesive layer.

The first separator 13 includes the first base film and the first adhesive layer, and at least one side of the first base film is provided with the first adhesive layer, so the first base film can be adhered to the positive electrode plate 11 or the negative electrode plate 12 through the first adhesive layer. Before winding, the first separator 13 may be laminated with the positive electrode plate 11 as a whole, or the first separator 13 may be laminated with the negative electrode plate 12 as a whole, to mitigate shrinkage of the first separator 13, which otherwise causes short circuits in the battery cell 100. The second separator 14 includes the second base film and the second adhesive layer, and at least one side of the second base film is provided with the second adhesive layer, so the second base film can be adhered to the positive electrode plate 11 or the negative electrode plate 12 through the second adhesive layer. Before winding, the second separator 14 may be laminated with the positive electrode plate 11 as a whole, or the second separator 14 may be laminated with the negative electrode plate 12 as a whole, to mitigate shrinkage of the second separator 14, which otherwise causes short circuits in the battery cell 100.

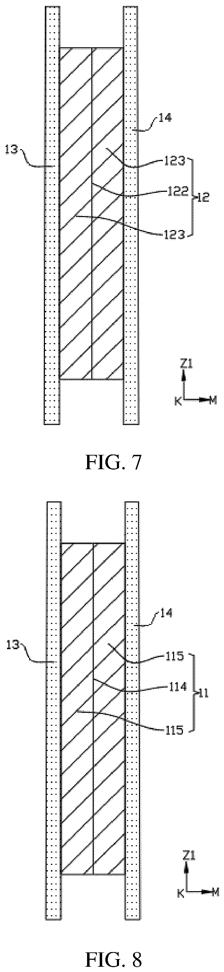

As shown in FIG. 7, in the embodiment where the first separator 13 and the second separator 14 are located on two sides of the negative electrode plate 12, before winding, the negative electrode plate 12, the first separator 13, and the second separator 14 may be thermally laminated as a whole. The first separator 13 is adhered to one side of the negative electrode plate 12 in the thickness direction M through its first adhesive layer, and the second separator 14 is adhered to the other side of the negative electrode plate 12 in the thickness direction M through its second adhesive layer, which can mitigate shrinkage of the first separator 13 and the second separator 14. In the embodiment where the first separator 13 and the second separator 14 are adhered to the two sides of the negative electrode plate 12 in the thickness direction M respectively, in the extension direction Z of the winding axis, the portions of the first separator 13 extending beyond the negative electrode plate 12 and the portions of the second separator 14 extending beyond the negative electrode plate 12 may be connected to form the first connection portion Q1 and the second connection portion Q2 located on the negative electrode plate 12 in the extension direction Z of the winding axis, or they may not be connected. FIG.8 shows the situation where the first separator 13 and the second separator 14 are adhered to the two sides of the negative electrode plate 12 in the thickness direction M respectively, and the portions of the first separator 13 extending beyond the negative electrode plate 12 and the portions of the second separator 14 extending beyond the negative electrode plate 12 may not be connected.

As shown in FIG. 8, in the embodiment where the first separator 13 and the second separator 14 are located on two sides of the positive electrode plate 11, before winding, the positive electrode plate 11, the first separator 13, and the second separator 14 may be thermally laminated as a whole. The first separator 13 is adhered to one side of the positive electrode plate 11 in the thickness direction M through its first adhesive layer, and the second separator 14 is adhered to the other side of the positive electrode plate 11 in the thickness direction M through its second adhesive layer, which can mitigate shrinkage of the first separator 13 and the second separator 14. In the embodiment where the first separator 13 and the second separator 14 are adhered to the two sides of the positive electrode plate 11 in the thickness direction M respectively, in the extension direction Z of the winding axis, the portions of the first separator 13 extending beyond the positive electrode plate 11 and the portions of the second separator 14 extending beyond the positive electrode plate 11 may be connected to form the first connection portion Q1 and the second connection portion Q2 located on the two sides of the positive electrode plate 11 in the extension direction Z of the winding axis, or they may not be connected. FIG. 8 shows the situation where the first separator 13 and the second separator 14 are adhered to the two sides of the positive electrode plate 11 in the thickness direction M respectively, and the portions of the first separator 13 extending beyond the positive electrode plate 11 and the portions of the second separator 14 extending beyond the positive electrode plate 11 may not be connected.

In some other embodiments, only the first separator 13 may include a first base film and a first adhesive layer, while the second separator 14 includes a second base film but does not include a second adhesive layer. In such embodiment, the first separator 13 and the second separator 14 may be connected through thermal lamination, so that the first separator 13 and the second separator 14 are adhered together through the first adhesive layer of the first separator 13 to form the first connection portion Q1 and the second connection portion Q2.

In some other embodiments, only the second separator 14 may include a second base film and a second adhesive layer, while the first separator 13 includes a first base film but does not include a first adhesive layer. In such embodiment, the first separator 13 and the second separator 14 may be connected through thermal lamination, so that the first separator 13 and the second separator 14 are adhered together through the second adhesive layer of the second separator 14 to form the first connection portion Q1 and the second connection portion Q2.

As shown in FIG. 1, in the embodiment where the first separator 13 and the second separator 14 are disposed on two sides of the negative electrode plate 12, the first winding starting end 1311 of the first separator 13 is flush with the negative electrode winding starting end 1211, and the second winding starting end 1411 of the second separator 14 is flush with the negative electrode winding starting end 1211.

An end of the first winding starting section 131 of the first separator 13 is the first winding starting end 1311. An end of the second winding starting section 141 of the second separator 14 is the second winding starting end 1411. Observed along the second direction Y, the first winding starting end 1311 and the negative electrode winding starting end 1211 overlap, meaning that the first winding starting end 1311 is flush with the negative electrode winding starting end 1211; and the second winding starting end 1411 and the negative electrode winding starting end 1211 overlap, meaning that the second winding starting end 1411 is flush with the negative electrode winding starting end 1211.

The first winding starting end 1311 may not be absolutely flush with the negative electrode winding starting end 1211. Considering equipment tolerance fluctuations, in the first direction X, an error distance of 0 mm to 0.5 mm may be present between the first winding starting end 1311 and the negative electrode winding starting end 1211. In other words, in the first direction X, a length by which the first winding starting end 1311 extends beyond the negative electrode winding starting end 1211 is 0 mm to 0.5 mm, or in the first direction X, a length by which the negative electrode winding starting end 1211 extends beyond the first winding starting end 1311 is 0 mm to 0.5 mm.

The first winding starting end 1311 is flush with the negative electrode winding starting end 1211, and the second winding starting end 1411 is flush with the negative electrode winding starting end 1211. This not only can separate the negative electrode winding starting section 121 from the positive electrode plate 11 in the second direction Y, but also facilitates winding of the negative electrode plate 12, the first separator 13, and the second separator 14 in the same direction, improving the production efficiency of the battery cell 100.

It should be noted that the winding of the negative electrode plate 12, the first separator 13, and the second separator 14 in the same direction means that the negative electrode plate 12, the first separator 13, and the second separator 14 have the same winding direction, and the negative electrode winding starting end 1211, the first winding starting end 1311, and the second winding starting end 1411 face the same direction. In the embodiment shown in FIG. 1, the negative electrode winding starting end 1211, the first winding starting end 1311, and the second winding starting end 1411 all face the first bent section 111.

As shown in FIG. 4, in the embodiment where the first separator 13 and the second separator 14 are disposed on two sides of the positive electrode plate 11, the first winding starting end 1311 of the first separator 13 is flush with the positive electrode winding starting end 1121, and the second winding starting end 1411 of the second separator 14 is flush with the positive electrode winding starting end 1121.

The negative electrode winding starting end 1211 faces the first bent section 111. The first winding starting end 1311 and the second winding starting end 1411 both face the second bent section 124.

The first winding starting end 1311 may not be absolutely flush with the positive electrode winding starting end 1121. Considering equipment tolerance fluctuations, in the first direction X, an error distance of 0 mm to 0.5 mm may be present between the first winding starting end 1311 and the positive electrode winding starting end 1121. In other words, in the first direction X, a length by which the first winding starting end 1311 extends beyond the positive electrode winding starting end 1121 is 0 mm to 0.5 mm, or in the first direction X, a length by which the positive electrode winding starting end 1121 extends beyond the first winding starting end 1311 is 0 mm to 0.5 mm.

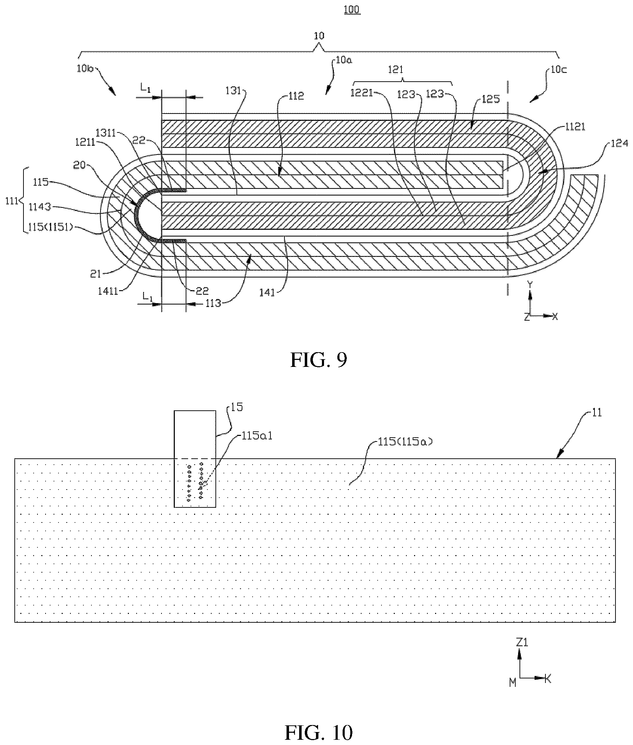

As shown in FIG. 9, in some embodiments, a positive electrode active substance layer 115 on the first bent section 111 facing the negative electrode winding starting end 1211 is a first positive electrode active substance portion 1151; and the battery cell 100 further includes a protective member 20, where at least a portion of the protective member 20 is located between the first positive electrode active substance portion 1151 and the negative electrode winding starting end 1211.

The positive electrode current collector 114 further includes a fifth substrate section 1143. In the winding direction of the positive electrode plate 11, two ends of the fifth substrate section 1143 are connected to the second substrate section 1141 and the third substrate section 1142 respectively. The positive electrode active substance layer 115 is provided on the fifth substrate section 1143 on both a side facing the winding axis and a side facing away from the winding axis. The fifth substrate section 1143, the positive electrode active substance layer 115 disposed on the side of the fifth substrate section 1143 facing the winding axis, and the positive electrode active substance layer 115 disposed on the side of the fifth substrate section 1143 facing away from the winding axis jointly form the first bent section 111. The positive electrode active substance layer 115 on the side of the fifth substrate section 1143 of the first bent section 111 facing the winding axis is the first positive electrode active substance portion 1151, and the first positive electrode active substance portion 1151 also faces the negative electrode winding starting end 1211.

The protective member 20 may be an insulation adhesive tape, and the protective member 20 can prevent ions released from the first positive electrode active substance portion 1151 from passing through, and in turn the protective member 20 can prevent ions released from the first positive electrode active substance portion 1151 from reaching the negative electrode winding starting end 1211, thereby reducing the risk of lithium precipitation at the negative electrode winding starting end 1211 and improving the safety performance of the battery cell 100.

The protective member 20 may be entirely located between the first positive electrode active substance portion 1151 and the negative electrode winding starting end 1211, allowing for the use of less material for the protective member 20 to prevent ions released from the first positive electrode active substance portion 1151 from reaching the negative electrode winding starting end 1211, thereby reducing costs. Alternatively, the protective member 20 may have a portion being located between the first positive electrode active substance portion 1151 and the negative electrode winding starting end 1211 and another portion extending beyond the first positive electrode active substance portion 1151 and the negative electrode winding starting end 1211. This increases the coverage area of the protective member 20, allowing the protective member 20 to better prevent ions released from the first positive electrode active substance portion 1151 from reaching the negative electrode winding starting end 1211 and to have a larger connection area with another structure, thereby facilitating fixing and improving connection stability.

The first positive electrode active substance portion 1151 faces the negative electrode winding starting end 1211, and at least a portion of the protective member 20 is located between the first positive electrode active substance portion 1151 and the negative electrode winding starting end 1211. The protective member 20 can prevent ions released from the first positive electrode active substance portion 1151 from moving to the negative electrode winding starting end 1211, reducing the risk of lithium precipitation at the negative electrode winding starting end 1211 in the battery cell 100 and improving the safety performance of the battery cell 100.

In some embodiments, the protective member 20 is fixed to the first positive electrode active substance portion 1151.

The protective member 20 may be entirely fixed to the first positive electrode active substance portion 1151, or the protective member 20 may have a portion being fixed to the first positive electrode active substance portion 1151 and another portion being fixed to the positive electrode active substance layer 115 on the positive electrode winding starting section 112 facing the negative electrode winding starting section 121 and/or the positive electrode active substance layer 115 on the first flat section 113 facing the negative electrode winding starting section 121.

The protective member 20 may be an adhesive tape with an adhesive layer, and at least a portion of the protective member 20 is adhered to a surface of the first positive electrode active substance portion 1151 facing the winding axis, making it easy to fix the protective member 20 to the first positive electrode active substance portion 1151. The protective member 20 may alternatively be formed by solidifying an adhesive applied to the surface of the first positive electrode active substance portion 1151 facing the winding axis.

The protective member 20 is fixed to the first positive electrode active substance portion 1151, which facilitates the fixing of the protective member 20 and allows the protective member 20 to better prevent ions released from the first positive electrode active substance portion 1151 from moving to the negative electrode winding starting end 1211, reducing the risk of lithium precipitation at the negative electrode winding starting end 1211 and improving the safety performance of the battery cell 100.

In some embodiments, the protective member 20 includes a first section 21, where the first section 21 is located in the first bent region 10b, and the first section 21 is located between the first positive electrode active substance portion 1151 and the negative electrode winding starting end 1211.

The first section 21 is located in the first bent region 10b. It can be understood that observed along the second direction Y, a projection of the first section 21 falls within the first bent region 10b. In the embodiment where the protective member 20 is fixed to the first positive active substance portion 1151, the first section 21 is adhered to the first positive electrode active substance portion 1151, and the entire first section 21 covers the surface of the first positive electrode active substance portion 1151 facing the winding axis.

The first section 21 is located in the first bent region 10b, the first section 21 is close to the first positive electrode active substance portion 1151, and the first section 21 is located between the first positive electrode active substance portion 1151 and the negative electrode winding starting end 1211. This can better prevent ions released from the first positive electrode active substance portion 1151 from moving to the negative electrode winding starting end 1211, reducing the risk of lithium precipitation at the negative electrode winding starting end 1211 in the battery cell 100 and improving the safety performance of the battery cell 100.

In some embodiments, the protective member 20 includes only the first section 21, meaning that the first section 21 is the protective member 20. The first section 21 is located in the first bent region 10b, meaning that the entire protective member 20 is located between the first positive electrode active substance portion 1151 and the negative electrode winding starting end 1211, and the entire protective member 20 is located in the first bent region 10b.

In some other embodiments, the protective member 20 further includes a second section 22, where the second section 22 is located in the flat region 10a, the second section 22 is connected to an end of the first section 21, and observed along the second direction Y, the second section 22 and the negative electrode winding starting section 121 at least partially overlap.

Observed along the second direction Y, a connection position between the second section 22 and the first section 21 overlaps with the connection position between the flat region 10a and the first bent region 10b. Observed along the second direction Y, the connection position between the second section 22 and the first section 21 overlaps with the negative electrode winding starting end 1211. Certainly, observed along the second direction Y, the connection position between the second section 22 and the first section 21 may alternatively not overlap with the negative electrode winding starting end 1211, meaning that the negative electrode winding starting end 1211 is located in the flat region 10a or the first bent region 10b.

The second section 22 may be fixed to the positive electrode active substance layer 115 on the side of the positive electrode winding starting section 112 facing the negative electrode winding starting section 121 in the second direction Y and/or the positive electrode active substance layer 115 on the side of the first flat section 113 facing the negative electrode winding starting section 121 in the second direction Y. For example, the second section 22 is adhered to the positive electrode active substance layer 115 on the side of the positive electrode winding starting section 112 facing the negative electrode winding starting section 121 in the second direction Y and/or the positive electrode active substance layer 115 on the side of the first flat section 113 facing the negative electrode winding starting section 121 in the second direction Y.

The protective member 20 further includes the second section 22, where the second section 22 is located in the flat region 10a, the second section 22 is connected to an end of the first section 21, and observed along the second direction Y, the second section 22 and the negative electrode winding starting section 121 at least partially overlap. This can increase the coverage area of the protective member 20, allowing the protective member 20 to better prevent ions released from the first positive electrode active substance portion 1151 from moving to the negative electrode winding starting end 1211, thereby reducing the risk of lithium precipitation at the negative electrode winding starting end 1211. In addition, this can increase the connection area between the protective member 20 and another structure (the another structure may be the positive electrode active substance layer 115), thereby facilitating the fixing of the protective member 20 and improving the connection stability of the protective member 20.

In some embodiments, only one end of the first section 21 may be connected to the second section 22, and the second section 22 may extend in a direction leaving the first section 21 to between the negative electrode winding starting section 121 and the positive electrode winding starting section 112, or the second section 22 may extend in the direction leaving the first section 21 to between the negative electrode winding starting section 121 and the first flat section 113.

In some other embodiments, both ends of the first section 21 are connected to the second section 22, and in the second direction Y, the second sections 22 at the two ends of the first section 21 are located on two sides of the negative electrode winding starting section 121 respectively.

The protective member 20 includes two second sections 22, and the two second sections 22 are connected to two ends of the first section 21 in the winding direction of the positive electrode plate 11. One of the two second sections 22 extends in the direction leaving the first section 21 to between the negative electrode winding starting section 121 and the positive electrode winding starting section 112, and the other of the two second sections 22 extends in the direction leaving the first section 21 to between the negative electrode winding starting section 121 and the first flat section 113.

Both ends of the first section 21 are connected to the second section 22, such that the first section 21 can prevent movement of the positive electrode active substance layer 115 toward the negative electrode winding starting end 1211 in the first direction X, and the two second sections 22 can prevent movement of the positive electrode active substance layers 115 toward the negative electrode winding starting section 121 from the two sides of the negative electrode winding starting section 121 in the second direction Y. In this way, the protective member 20 has a larger coverage area, and can better prevent ions released from the first positive electrode active substance portion 1151 from moving to the negative electrode winding starting end 1211, reducing the risk of lithium precipitation at the negative electrode winding starting end 1211 and improving the safety performance of the battery cell 100. Both ends of the first section 21 are connected to the second section 22, such that the protective member 20 and another structure can have a large connection area, improving the connection stability of the protective member 20.

In some embodiments, in the first direction X, a distance between an end of the second section 22 facing away from the first section 21 and the negative electrode winding starting end 1211 is L₁, where L₁ % 2 mm.

In the embodiment where observed along the second direction Y, the connection position between the first section 21 and the second section 22 overlaps with the negative electrode winding starting end 1211, the distance L₁ between the end of the second section 22 facing away from the first section 21 and the negative electrode winding starting end 1211 is a size of the overlapping region in the first direction X between the second section 22 and the negative electrode winding starting section 121 observed along the second direction Y.

For example, L₁ may be 2 mm, 3 mm, 4 mm, 5 mm, 6 mm, 7 mm, 8 mm, 9 mm, 10 mm, 11 mm, 12 mm, or the like.

When L₁ < 2 mm, the overlapping section between the first section 21 and the negative electrode winding starting section 121 is small, not significantly preventing ions released from the first positive electrode active substance portion 1151 from moving to the negative electrode winding starting section 121. Therefore, when L₁ % 2 mm, it helps the protective member 20 to more effectively prevent ions released from the first positive electrode active substance portion 1151 from moving to the negative electrode winding starting section 121, reducing the risk of lithium precipitation at the negative electrode winding starting end 1211 in the battery cell 100 and improving the safety performance of the battery cell 100.

In some embodiments, L₁ ≤ 10 mm.

For example, L₁ may be 2.5 mm, 3.5 mm, 4.5 mm, 5.5 mm, 6.5 mm, 7.5 mm, 8.5 mm, 9.5 mm, 10 mm, or the like.

When L₁ > 10 mm, the overlapping section between the first section 21 and the negative electrode winding starting section 121 is long, so too many ions released from the positive electrode active substance layer 115 cannot move to the negative electrode plate 12, meaning that a large amount of active substance in a first negative electrode active substance layer 123a cannot take effects, reducing the capacity of the battery cell 100. Therefore, when L₁ ≤ 10 mm, it ensures that while the protective member 20 can reduce the risk of lithium precipitation in the battery cell 100, as many ions as possible released from the positive electrode active substance layer 115 can move to the negative electrode plate 12, allowing the positive electrode active substance layer 115 to fully take effects, thereby ensuring a high capacity of the battery cell 100.

As shown in FIG. 1, in some embodiments, the positive electrode plate 11 further includes a positive electrode winding terminating section 116 located in the flat region 10a, where an end of the positive electrode winding terminating section 116 is a positive electrode winding terminating end 1161 of the positive electrode plate 11; and the negative electrode plate 12 further includes a negative electrode winding terminating section 126, where an end of the negative electrode winding terminating section 126 forms a negative electrode winding terminating end 1261 of the negative electrode plate 12, and the negative electrode winding terminating section 126 is located on an outer side of the positive electrode winding terminating section 116.

The positive electrode winding terminating section 116 is the last section of the positive electrode plate 11, and the positive electrode winding terminating end 1161 is a terminating position of winding of the positive electrode plate 11. The positive electrode winding terminating section 116 is located in the flat region 10a. The negative electrode winding terminating section 126 is the last section of the negative electrode plate 12, and the negative electrode winding terminating end 1261 is a terminating position of winding of the negative electrode plate 12. The negative electrode winding terminating section 126 is located on the outer side of the positive electrode winding terminating section 116 and extends beyond the positive electrode winding terminating section 116 in the winding direction. The outer side of the positive electrode winding terminating section 116 is a side of the positive electrode winding terminating section 116 facing away from the winding axis, meaning that the negative electrode winding terminating section 126 is located on the side of the positive electrode winding terminating section 116 facing away from the winding axis. The positive electrode plate 11 is not disposed on an outer side of the negative electrode winding terminating section 126.

The negative electrode winding terminating end 1261 may be located in the flat region 10a or in either the first bent region 10b or the second bent region 10c.

The negative electrode winding terminating section 126 is located on the outer side of the positive electrode winding terminating section 116, such that the electrode plate at the outermost layer of the electrode assembly 10 is the negative electrode plate 12, which is conducive to reducing the risk of lithium precipitation in the battery cell 100. Still referring to FIG. 1, in some embodiments, the negative electrode active substance layer 123 is provided on a side of the negative electrode winding terminating section 126 facing the winding axis, and the negative electrode active substance layer 123 is not provided on a side of the negative electrode winding terminating section 126 facing away from the winding axis.

The negative electrode current collector 122 further includes a sixth substrate section 1223, where the negative electrode active substance layer 123 is provided on a side of the sixth substrate section 1223 facing the winding axis, and the negative electrode active substance layer 123 is not provided on a side of the sixth substrate section 1223 facing away from the winding axis. The sixth substrate section 1223 and the negative electrode active substance layer 123 disposed on the side of the sixth substrate section 1223 facing the winding axis jointly form the negative electrode winding terminating section 126.

In other words, the negative electrode active substance layer 123 is provided on the side of the negative electrode winding terminating section 126 facing the winding axis, and the negative electrode active substance layer 123 is not provided on the side of the negative electrode winding terminating section 126 facing away from the winding axis. The negative electrode active substance layer 123 is provided on the side of the negative electrode winding terminating section 126 facing the winding axis of the electrode assembly 10, and the negative electrode active substance layer 123 is not provided on the side of the negative electrode winding terminating section 126 facing away from the winding axis, which reduces thickness of one negative electrode active substance layer 123 in the electrode assembly 10, helping increase the volumetric energy density of the battery cell 100.

In some other embodiments, the negative electrode active substance layer 123 is provided on both sides of the negative electrode winding terminating section 126.

In other words, the negative electrode active substance layer 123 is provided on the sixth substrate section 1223 on both the side facing the winding axis and the side facing away from the winding axis, such that the negative electrode active substance layer 123 is provided on both sides of the negative electrode winding terminating section 126. The negative electrode active substance layer 123 is provided on both sides of the negative electrode winding terminating section 126, which can reduce the number of changes in the coating manner of the negative electrode active substance layer 123 or consistently use continuous double-sided coating for the negative electrode active substance layer 123 during manufacturing of the negative electrode plate 12, helping improve the production efficiency.

In the embodiment where the electrode assembly 10 includes the first separator 13 and the second separator 14, the first separator 13 further includes a first winding terminating section 132, an end of the first winding terminating section 132 being a first winding terminating end 1321 of the first separator 13, and the second separator 14 further includes a second winding terminating section 142, an end of the second winding terminating section 142 being a second winding terminating end 1421 of the second separator 14.

The first winding terminating section 132 is the last section of the first separator 13, and the first winding terminating end 1321 is a terminating position of winding of the first separator 13. The second winding terminating section 142 is the last section of the second separator 14, and the second winding terminating end 1421 is a terminating position of winding of the second separator 14.

In the embodiment where the negative electrode winding terminating section 126 is located on an outer side of the positive electrode winding terminating section 116 or the positive electrode winding terminating section 116 is located on an outer side of the negative electrode winding terminating section 126, the first winding terminating section 132 and the second winding terminating section 142 are located on two sides of the negative electrode winding terminating section 126 respectively, the first winding terminating end 1321 is flush with the negative electrode winding terminating end 1261, and the second winding terminating end 1421 is flush with the negative electrode winding terminating end 1261.

The first winding terminating end 1321 is flush with the negative electrode winding terminating end 1261, and the second winding terminating end 1421 is flush with the negative electrode winding terminating end 1261, such that after the winding of the electrode assembly 10 is completed, the first separator 13, the second separator 14, and the negative electrode plate 12 can be cut simultaneously with a double cutter. This improves the winding efficiency. If the first winding terminating end 1321 is not flush with the negative electrode winding terminating end 1261 and the second winding terminating end 1421 is not flush with the negative electrode winding terminating end 1261, the negative electrode plate 12 needs to be cut first, followed by the first separator 13 and the second separator 14, and the winding tower needs to coordinate with the cutting action at the cutting moment to slow down the speed. In addition, a flush terminating cutting position of the first winding terminating end 1321, the negative electrode winding terminating end 1261, and the second winding terminating end 1421 can precisely serve as a flush winding head of the next electrode assembly 10, that is, as the negative electrode winding starting end 1211, first winding starting end 1311 of the first separator 13, and second winding starting end 1411 of the second separator 14 of the next electrode assembly 10, where the next negative electrode winding starting end 1211, first winding starting end 1311 of the first separator 13, and second winding starting end 1411 of the second separator 14 are flush.

It should be noted that the first winding terminating end 1321 may not be absolutely flush with the negative electrode winding terminating end 1261. Considering equipment tolerance fluctuations, in the winding direction, an error distance of 0 mm to 0.5 mm may be present between the first winding terminating end 1321 and the negative electrode winding terminating end 1261. In other words, in the first direction X, a length by which the first winding terminating end 1321 extends beyond the negative electrode winding terminating end 1261 is 0 mm to 0.5 mm, or in the first direction X, a length by which the negative electrode winding terminating end 1261 extends beyond the first winding terminating end 1321 is 0 mm to 0.5 mm.

The second winding terminating end 1421 may not be absolutely flush with the negative electrode winding terminating end 1261. Considering equipment tolerance fluctuations, in the winding direction, an error distance of 0 mm to 0.5 mm may be present between the second winding terminating end 1421 and the negative electrode winding terminating end 1261. In other words, in the first direction X, a length by which the second winding terminating end 1421 extends beyond the negative electrode winding terminating end 1261 is 0 mm to 0.5 mm, or in the first direction X, a length by which the negative electrode winding terminating end 1261 extends beyond the second winding terminating end 1421 is 0 mm to 0.5 mm.

Certainly, the first winding terminating end 1321 may not be flush with the negative electrode winding terminating end 1261, and the second winding terminating end 1421 may not be flush with the negative electrode winding terminating end 1261. Certainly, as shown in FIG. 4, in some other embodiments, the positive electrode winding terminating section 116 may alternatively be located on an outer side of the negative electrode winding terminating section 126, such that the electrode plate at the outermost layer of the electrode assembly 10 is the positive electrode plate 11. The negative electrode active substance layer 123 is provided on both sides of the negative electrode winding terminating section 126, so the negative electrode plate 12 can be subjected to continuous double-sided coating. The positive electrode active substance layer 115 is provided on a side of the positive electrode winding terminating section 116 facing the winding axis, and the positive electrode active substance layer 115 is not provided on a side of the positive electrode winding terminating section 116 facing away from the winding axis. In the winding direction, the negative electrode winding terminating end 1261 may extend beyond the positive electrode winding terminating end 1161, so as to reduce the risk of lithium precipitation.

In some embodiments, the electrode assembly 10 further includes a positive electrode tab 15 and a negative electrode tab 16, where the positive electrode tab 15 is riveted to the positive electrode plate 11; and/or the negative electrode tab 16 is riveted to the negative electrode plate 12.

This may be that the positive electrode tab 15 is riveted to the positive electrode plate 11 to implement an electrical connection between the positive electrode tab 15 and the positive electrode plate 11, and the negative electrode tab 16 is electrically connected to the negative electrode plate 12 in another manner, for example, through welding or conductive adhesive. This may alternatively be that the negative electrode tab 16 is riveted to the negative electrode plate 12 to implement an electrical connection between the negative electrode tab 16 and the negative electrode plate 12, and the positive electrode tab 15 is electrically connected to the positive electrode plate 11 in another manner, for example, through welding or conductive adhesive. This may be that the positive electrode tab 15 is riveted to the positive electrode plate 11, and the negative electrode tab 16 is riveted to the negative electrode plate 12.

The positive electrode tab 15 being riveted to the positive electrode plate 11 helps improve the stability of the electrical connection between the positive electrode tab 15 and the positive electrode plate 11. The negative electrode tab 16 being riveted to the negative electrode plate 12 helps improve the stability of the electrical connection between the negative electrode tab 16 and the negative electrode plate 12.

In the embodiment where the positive electrode tab 15 is riveted to the positive electrode plate 11, the positive electrode tab 15 is riveted to the positive electrode plate 11 in various manners. As shown in FIG. 10 to FIG. 22, in some embodiments, the positive electrode plate 11 includes a positive electrode current collector 114, where the positive electrode active substance layer 115 on a side of the positive electrode current collector 114 is a first positive electrode active substance layer 115a, and observed along a direction perpendicular to a thickness direction M of the positive electrode plate 11 (for example, observed along a length direction K of the positive electrode plate 11), the first positive electrode active substance layer 115a has a first region 115a1 located between the positive electrode tab 15 and the positive electrode current collector 114, the positive electrode tab 15 being riveted to the positive electrode plate 11 in the first region 115a1.

The first region 115a1 is stacked between the positive electrode tab 15 and the positive electrode current collector 114 in the thickness direction M of the positive electrode plate 11.

The first positive electrode active substance layer 115a is disposed on a side of the positive electrode current collector 114, at least a portion of the positive electrode tab 15 is disposed on a side of the first positive electrode active substance layer 115a facing away from the positive electrode current collector 114, and in the thickness direction M of the positive electrode plate 11, the positive electrode tab 15, the first positive electrode active substance layer 115a, and the positive electrode current collector 114 are stacked sequentially. The first region 115a1 of the first positive electrode active substance layer 115a is located between the positive electrode tab 15 and the positive electrode current collector 114. The positive electrode tab 15 being riveted to the positive electrode plate 11 in the first region 115a1 requires a structure to penetrate the first region 115a1 to implement an electrical connection between the positive electrode tab 15 and the positive electrode current collector 114, thereby implementing an electrical connection between the positive electrode tab 15 and the positive electrode plate 11.

The positive electrode active substance layer 115 may be disposed on only one side of the positive electrode current collector 114, and the positive electrode active substance layer 115 is not disposed on another side of the positive electrode current collector 114. In some other embodiments, the positive electrode active substance layer 115 is provided on both sides of the positive electrode current collector 114, which is defined as a second positive electrode active substance layer 115b, where the first positive electrode active substance layer 115a and the second positive electrode active substance layer 115b are disposed on two opposite sides of the positive electrode current collector 114 respectively.

The first positive electrode active substance layer 115a of the positive electrode plate 11 has the first region 115a1 located between the positive electrode tab 15 and the positive electrode current collector 114, and the positive electrode tab 15 is riveted to the positive electrode plate 11 in the first region 115a1, such that a mounting slot does not need to be processed on the first positive electrode active substance layer 115a after the coating is completed, or a mounting slot does not need to be reserved on the positive electrode current collector 114 by applying an adhesive tape before the coating. This can improve the production efficiency and reduce the production costs.

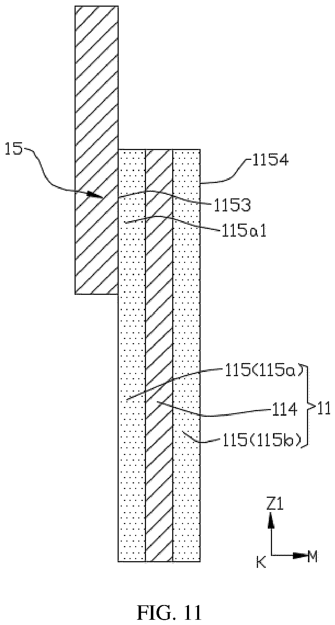

As shown in FIG. 11 to FIG. 22, in some embodiments, the positive electrode plate 11 is provided with a first through hole 1152 penetrating two sides of the positive electrode plate 11 in the thickness direction M, and observed along the thickness direction M of the positive electrode plate 11, the first through hole 1152 is located in the first region 115al; and the positive electrode tab 15 has a first body portion 151 and a first riveting portion 152, where the first region 115a1 has a first surface 1153 facing away from the positive electrode current collector 114, the positive electrode plate 11 has a second surface 1154 opposite the first surface 1153, the first body portion 151 is disposed on the first surface 1153, the first riveting portion 152 protrudes from the first body portion 151 and penetrates the first through hole 1152, and an end of the first riveting portion 152 facing away from the first body portion 151 abuts against the second surface 1154. A surface of the first region 115a1 facing away from the positive electrode current collector 114 is the first surface 1153, the first body portion 151 of the positive electrode tab 15 is attached to the first surface 1153, and the first surface 1153 is a portion of a surface of the first positive electrode active substance layer 115a facing away from the positive electrode current collector 114.

In the embodiment where the positive electrode current collector 114 is provided with the first positive electrode active substance layer 115a on one side and not provided with the active substance layer on another side, the second surface 1154 of the positive electrode plate 11 is a surface of the positive electrode current collector 114 facing away from the first positive electrode active substance layer 115a.

In the embodiment where the positive electrode current collector 114 is provided with the first positive electrode active substance layer 115a on one side and the second positive electrode active substance layer 115b on another side, if observed along the thickness direction M of the positive electrode plate 11, the first region 115a1 and the second positive electrode active substance layer 115b overlap, the second surface 1154 of the positive electrode plate 11 can be a surface of the second positive electrode active substance layer 115b facing away from the positive electrode current collector 114.

In the embodiment where the positive electrode current collector 114 is provided with the first positive electrode active substance layer 115a on one side and the second positive electrode active substance layer 115b on another side, if observed along the thickness direction M of the positive electrode plate 11, the first region 115a1 and the second positive electrode active substance layer 115b do not overlap, the second surface 1154 of the positive electrode plate 11 is a surface of the positive electrode current collector 114 facing away from the first positive electrode active substance layer 115a. The first through hole 1152 penetrates the positive electrode plate 11 in the thickness direction M of the positive electrode plate 11, with two ends of the first through hole 1152 in an extension direction extending to the first surface 1153 and the second surface 1154 respectively. A portion of the first through hole 1152 is located in the first region 115a1, and another portion of the first through hole 1152 is located in the positive electrode current collector 114.

An end of the first riveting portion 152 is connected to a surface where the first body portion 151 is attached to the first surface 1153, the first riveting portion 152 penetrates the first through hole 1152, and when the first riveting portion 152 passes through the portion of the first through hole 1152 located in the positive electrode current collector 114, the first riveting portion 152 comes into contact with the positive electrode current collector 114, which implements an electrical connection between the positive electrode tab 15 and the positive electrode current collector 114, thereby implementing an electrical connection between the positive electrode tab 15 and the positive electrode plate 11. Another end of the first riveting portion 152 extends out of the first through hole 1152 and protrudes from the second surface 1154.

The end of the first riveting portion 152 protruding from the second surface 1154 forms a first limiting portion 1521, and the first limiting portion 1521 abuts against the second surface 1154. The first body portion 151 and the first limiting portion 1521 abut against the first surface 1153 and the second surface 1154 in the thickness direction M of the positive electrode plate 11 respectively, thereby preventing the positive electrode tab 15 from falling off the positive electrode plate 11.

The first riveting portion 152 of the positive electrode tab 15 protrudes from the first body portion 151 and penetrates the first through hole 1152, and the end of the first riveting portion 152 facing away from the first body portion 151 abuts against the second surface 1154, allowing for convenient connection and reducing the risk of the positive electrode tab 15 falling off the positive electrode plate 11.

The positive electrode plate 11 is riveted to the positive electrode tab 15 in various manners. The riveting manner of the positive electrode plate 11 and the positive electrode tab 15 is described using an example where the first positive electrode active substance layer 115a and the second positive electrode active substance layer 115b are provided on two sides of the positive electrode current collector 114 respectively, and observed along the thickness direction M of the positive electrode plate 11, the first positive electrode active substance layer 115a and the second positive electrode active substance layer 115b overlap.

In some embodiments, as shown in FIG. 11, in the thickness direction M of the positive electrode plate 11, the positive electrode tab 15 is disposed on the side of the first positive electrode active substance layer 115a facing away from the positive electrode current collector 114, and observed along the thickness direction M of the positive electrode plate 11, the positive electrode tab 15 and the first positive electrode active substance layer 115a overlap. In the width direction Z1 of the positive electrode plate 11, the positive electrode tab 15 protrudes from an end of the positive electrode plate 11.

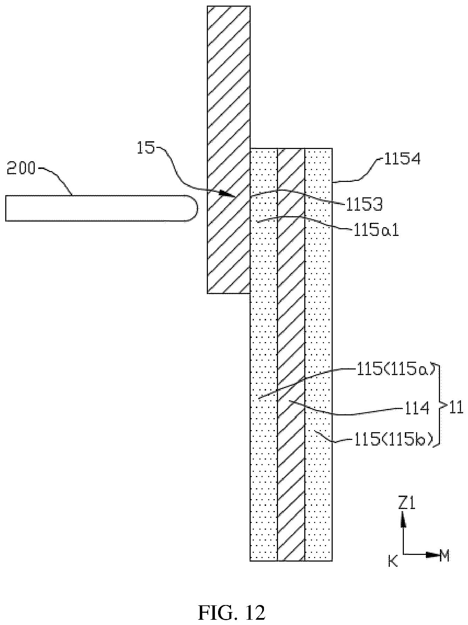

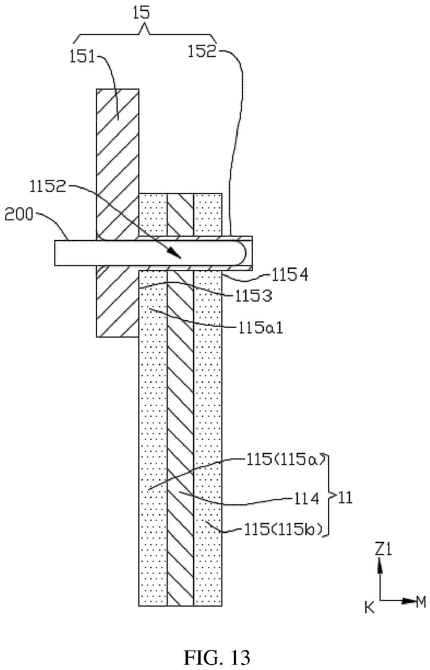

As shown in FIG. 12 and FIG. 13, in the thickness direction M of the positive electrode plate 11, a punch needle 200 sequentially penetrates the positive electrode tab 15, the first positive electrode active substance layer 115a, the positive electrode current collector 114, and the second positive electrode active substance layer 115b from a side of the positive electrode tab 15 facing away from the first positive electrode active substance layer 115a. As shown in FIG. 13, in the process of the punch needle 200 penetrating the positive electrode tab 15, the positive electrode tab 15 deforms and extends under the action of the punch needle 200 to form the first riveting portion 152, and a portion of the positive electrode tab 15 located on the side of the first positive electrode active substance layer 115a facing away from the positive electrode current collector 114 is the first body portion 151. The first riveting portion 152 follows the punch needle 200 to sequentially penetrate the first region 115a1 of the first positive electrode active substance layer 115a, the positive electrode current collector 114, and the second positive electrode active substance layer 115b, and forms the first through hole 1152 on the positive electrode plate 11. A portion of the first through hole 1152 is located in the first region 115a1 of the first positive electrode active substance layer 115a, a portion of the first through hole 1152 is located in the positive electrode current collector 114, and a portion of the first through hole 1152 is located in the second positive electrode active substance layer 115b. The first riveting portion 152 is in contact with the positive electrode current collector 114 within the portion of the first through hole 1152 located in the positive electrode current collector 114 to implement an electrical connection between the positive electrode tab and the positive electrode current collector 114.

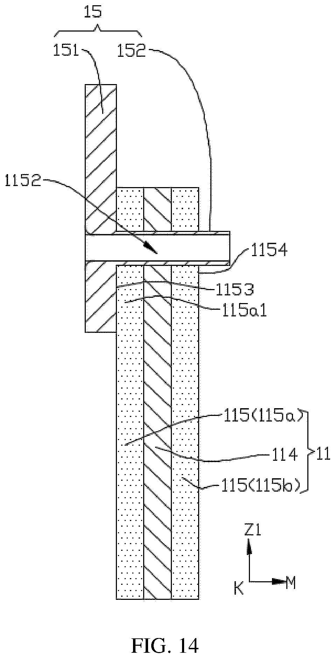

As shown in FIG. 14, the punch needle 200 is then pulled out from the first through hole 1152.

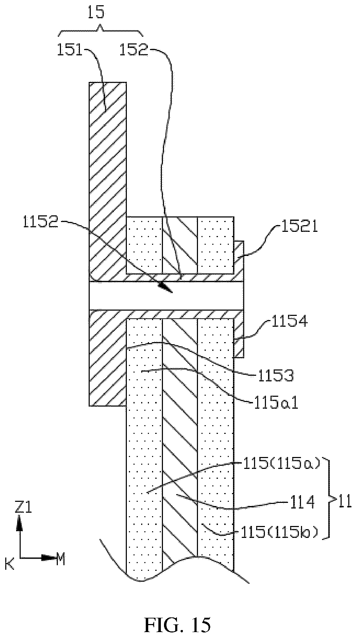

As shown in FIG. 15, the portion of the first riveting portion 152 extending out of the first through hole 1152 is flattened from a side of the second positive electrode active substance layer 115b facing away from the positive electrode current collector 114 to form the first limiting portion 1521. It can be understood that the first limiting portion 1521 is a flange formed by the end of the first riveting portion 152 extending out of the first through hole 1152. The first limiting portion 1521 and the first body portion 151 are located on the side of the first positive electrode active substance layer 115a facing away from the positive electrode current collector 114 and the side of the second positive electrode active substance layer 115b facing away from the positive electrode current collector 114 respectively, to rivet the positive electrode tab 15 to the positive electrode plate 11 in the first region 115a1.

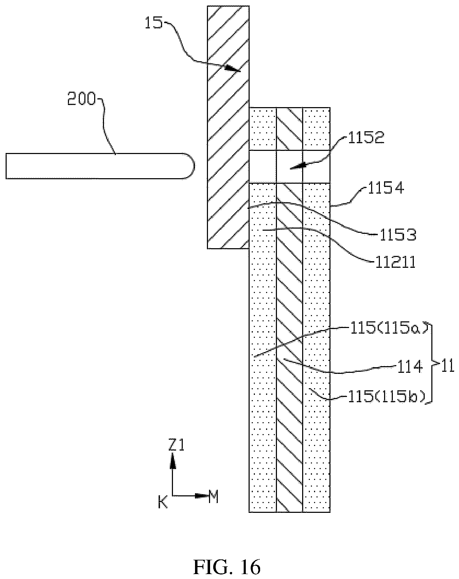

In some other embodiments, as shown in FIG. 16, the first through hole 1152 may alternatively be first opened on the positive electrode plate, with the first through hole 1152 sequentially penetrating the first positive electrode active substance layer 115a, the positive electrode current collector 114, and the second positive electrode active substance layer 115b. The positive electrode tab 15 is disposed on the side of the first positive electrode active substance layer 115a facing away from the positive electrode current collector 114. Observed along the thickness direction M of the positive electrode plate 11, the positive electrode tab 15 and the first positive electrode active substance layer 115a overlap, and the positive electrode tab 15 covers the first through hole 1152. In the width direction Z1 of the positive electrode plate 11, the positive electrode tab 15 protrudes from an end of the positive electrode plate 11.

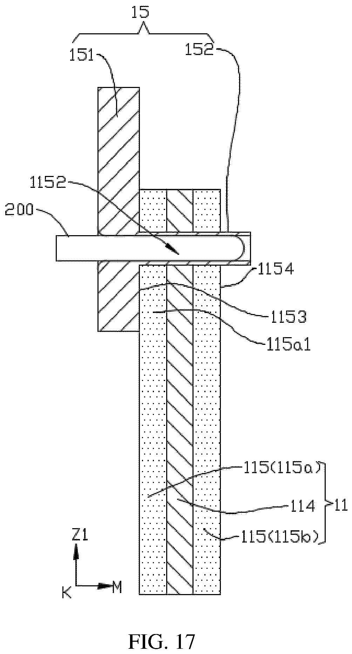

As shown in FIG. 17, in the thickness direction M of the positive electrode plate 11, the punch needle 200 sequentially penetrates the positive electrode tab 15 and the first through hole 1152 from the side of the positive electrode tab 15 facing away from the first positive electrode active substance layer 115a. As shown in FIG. 17, in the process of the punch needle 200 penetrating the positive electrode tab 15, the positive electrode tab 15 deforms and extends under the action of the punch needle 200 to form the first riveting portion 152, and a portion of the positive electrode tab 15 located on the side of the first positive electrode active substance layer 115a facing away from the positive electrode current collector 114 is the first body portion 151. The first riveting portion 152 follows the punch needle 200 to penetrate the first through hole 1152, with the end of the first riveting portion 152 facing away from the first body portion 151 extending out of the first through hole 1152. The first riveting portion 152 is in contact with the positive electrode current collector 114 within the portion of the first through hole 1152 located in the positive electrode current collector 114 to implement an electrical connection between the positive electrode tab 15 and the positive electrode current collector 114.

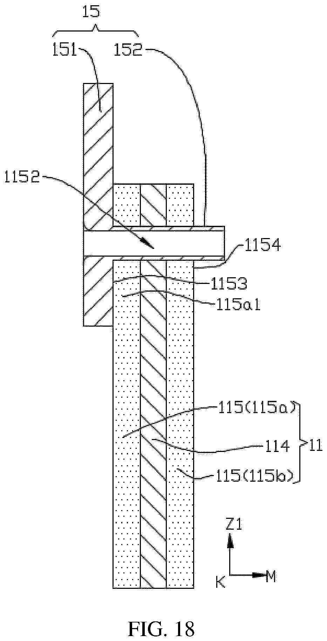

As shown in FIG. 18, the punch needle 200 is then pulled out from the first through hole 1152.

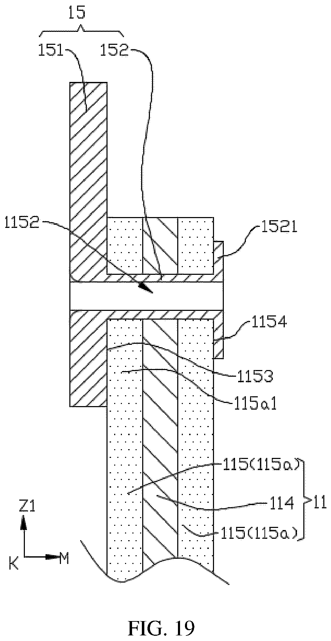

As shown in FIG. 19, the portion of the first riveting portion 152 extending out of the first through hole 1152 is flattened from the side of the second positive electrode active substance layer 115b facing away from the positive electrode current collector 114 to form the first limiting portion 1521. The first limiting portion 1521 and the first body portion 151 are located on the side of the first positive electrode active substance layer 115a facing away from the positive electrode current collector 114 and the side of the second positive electrode active substance layer 115b facing away from the positive electrode current collector 114 respectively, to rivet the positive electrode tab 15 to the positive electrode plate 11 in the first region 115a1.

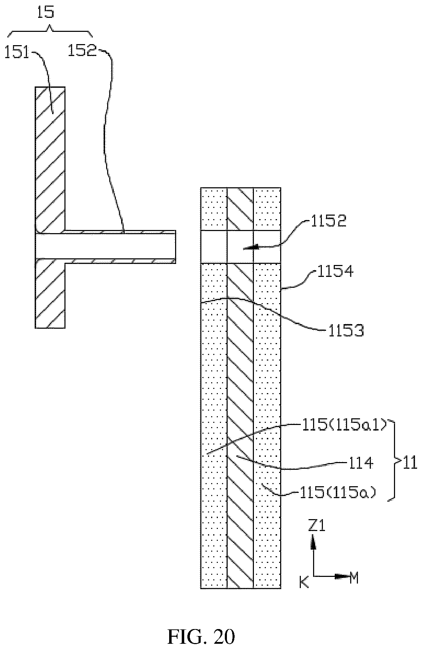

In still some other embodiments, as shown in FIG. 20, the positive electrode tab 15 includes a first body portion 151 and a first riveting portion 152 connected to the first body portion 151. The first body portion 151 and the first riveting portion 152 may be integrally formed, or may be separately disposed and then connected as a whole through welding, conductive adhesive, or the like. The first riveting portion 152 may be a hollow structure or a solid structure. FIG. 20 shows the case where the first riveting portion 152 is a hollow structure.

The positive electrode plate 11 is provided with a first through hole 1152, where the first through hole 1152 sequentially penetrates the first positive electrode active substance layer 115a, the positive electrode current collector 114, and the second positive electrode active substance layer 115b.

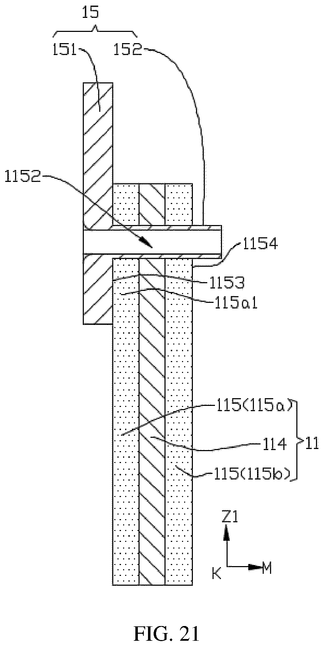

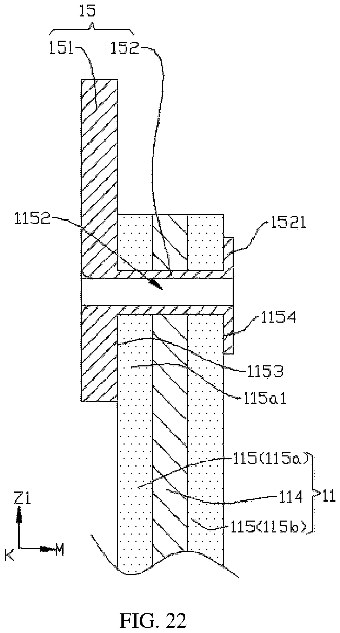

As shown in FIG. 21, the first riveting portion 152 is inserted in the first through hole 1152 from the end of the first through hole 1152 located in the first positive electrode active substance layer 115a, and extends out of the first through hole 1152 from the end of the first through hole 1152 located in the second positive electrode active substance layer 115b. The first riveting portion 152 is in contact with the positive electrode current collector 114 within the first through hole 1152 to implement an electrical connection between the positive electrode tab 15 and the positive electrode current collector 114. As shown in FIG. 22, the portion of the first riveting portion 152 extending out of the first through hole 1152 is flattened from the side of the second positive electrode active substance layer 115b facing away from the positive electrode current collector 114 to form the first limiting portion 1521. The first limiting portion 1521 and the first body portion 151 are located on the side of the second positive active substance layer 115b facing away from the positive electrode current collector 114 and the side of the first active substance layer 115a facing away from the positive electrode current collector 114 respectively, to rivet the positive electrode tab 15 to the positive electrode plate 11 in the first region 115a1.

In some embodiments, the positive electrode tab 15 may be riveted to the positive electrode plate 11 using a first rivet 300. The battery cell 100 further includes the first rivet 300, and the positive electrode tab 15 is riveted to the positive electrode plate 11 in the first region 115a1 using the first rivet 300. The positive electrode tab 15 being riveted to the positive electrode plate 11 using the first rivet 300 helps improve the stability of the connection between the positive electrode tab 15 and the positive electrode plate 11 and enhance the current flow capacity.

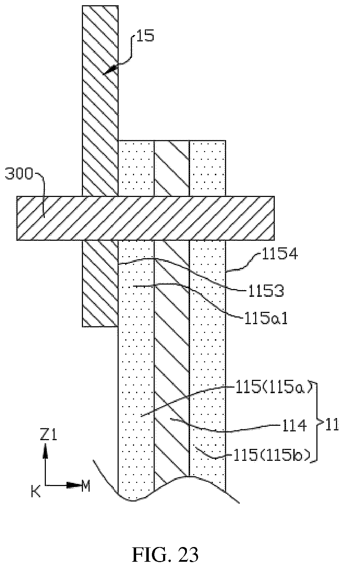

As shown in FIG. 23, in the thickness direction M of the positive electrode plate 11, the positive electrode tab 15 is disposed on the side of the first positive electrode active substance layer 115a facing away from the positive electrode current collector 114, and observed along the thickness direction M of the positive electrode plate 11, the positive electrode tab 15 and the first positive electrode active substance layer 115a overlap. In the width direction Z1 of the positive electrode plate 11, the positive electrode tab 15 protrudes from an end of the positive electrode plate 11. The first rivet 300 sequentially penetrates the positive electrode tab 15 and the positive electrode plate 11, with two ends of the first rivet 300 in the thickness direction M of the positive electrode plate 11 protruding from the first surface 1153 and the second surface 1154 respectively. The first rivet 300 is a conductor, and when the first rivet 300 penetrates the positive electrode plate 11, the first rivet 300 is in contact with the positive electrode current collector 114 to implement an electrical connection between the positive electrode tab 15 and the positive electrode current collector 114 through the first rivet 300.

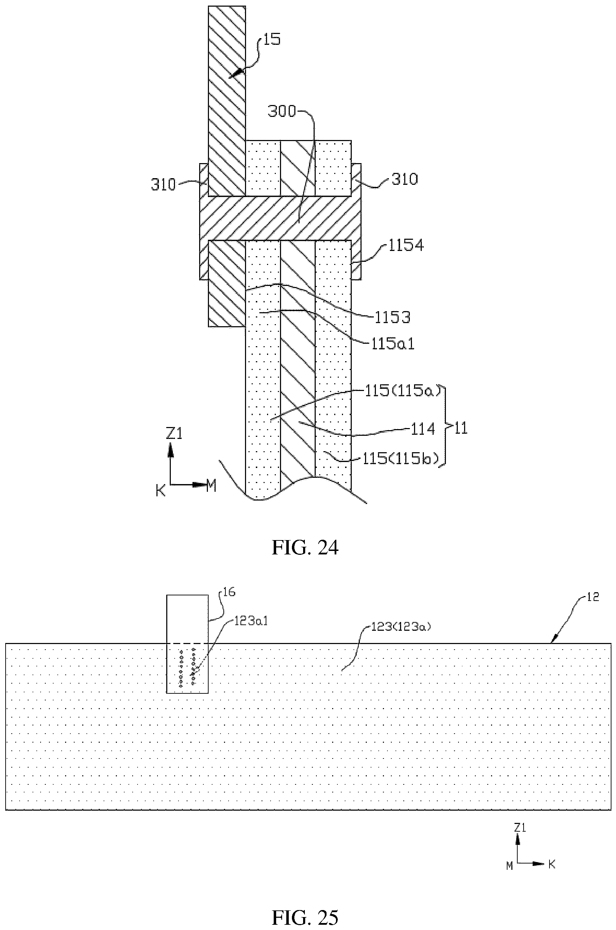

As shown in FIG. 24, in the thickness direction M of the positive electrode plate 11, the two ends of the first rivet 300 are flattened, the two ends of the first rivet 300 protruding from the first surface 1153 and the second surface 1154 form two first limiting structures 310, and the two first limiting structures 310 abut against the first surface 1153 and the second surface 1154 respectively, to rivet the positive electrode tab 15 to the positive electrode plate 11 in the first region 115a1.

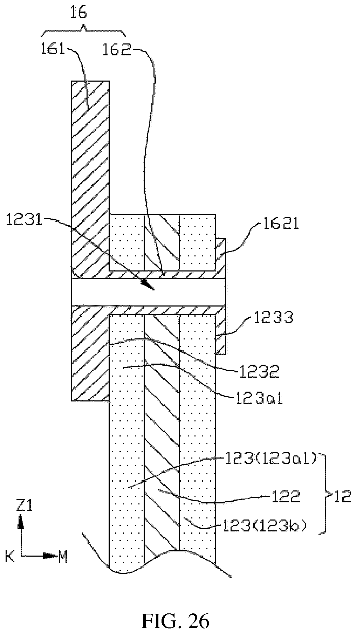

In the embodiment where the negative electrode plate 12 is riveted to the negative electrode tab 16, as shown in FIG. 25 and FIG. 26, the negative electrode plate 12 includes a negative electrode current collector 122, where the negative electrode active substance layer 123 on a side of the negative electrode current collector 122 is a first negative electrode active substance layer 123a, and observed along a direction perpendicular to a thickness direction M of the negative electrode plate 12 (for example, observed along a length direction K of the negative electrode plate 12), the first negative electrode active substance layer 123a has a second region 123a1 located between the negative electrode tab 16 and the negative electrode current collector 122, the negative electrode tab 16 being riveted to the negative electrode plate 12 in the second region 123a1.

The second region 123a1 is stacked between the negative electrode tab 16 and the negative electrode current collector 122 in the thickness direction of the negative electrode plate 12.

The negative electrode active substance layer 123 may be disposed on only one side of the negative electrode current collector 122, and the negative electrode active substance layer 123 is not disposed on another side of the negative electrode current collector 122. In some other embodiments, the negative electrode active substance layer 123 is provided on both sides of the negative electrode current collector 122, which is defined as a second negative electrode active substance layer 123b, where the first negative electrode active substance layer 123a and the second negative electrode active substance layer 123b are disposed on two opposite sides of the negative electrode current collector 122 respectively.

The first negative electrode active substance layer 123a of the negative electrode plate 12 has the second region 123a1 located between the negative electrode tab 16 and the negative electrode current collector 122, and the negative electrode tab 16 is riveted to the negative electrode plate 12 in the second region 123a1, such that a mounting slot does not need to be processed on the first negative electrode active substance layer 123a after the coating is completed, or a mounting slot does not need to be reserved on the negative electrode current collector 122 by applying an adhesive tape before the coating. This can improve the production efficiency and reduce the production costs, thereby improving the production efficiency and reducing the costs.

As shown in FIG. 26, in some embodiments, the negative electrode plate 12 is provided with a second through hole 1231 penetrating two sides of the negative electrode plate 12 in the thickness direction M, and observed along the thickness direction M of the negative electrode plate 12, the second through hole 1231 is located in the second region 123al; and the negative electrode tab 16 has a second body portion 161 and a second riveting portion 162, where the second region 123a1 has a third surface 1232 facing away from the negative electrode current collector 122, the negative electrode plate 12 has a fourth surface 1233 opposite the third surface 1232, the second body portion 161 is disposed on the third surface 1232, the second riveting portion 162 protrudes from the second body portion 161 and penetrates the second through hole 1231, and an end of the second riveting portion 162 facing away from the second body portion 161 abuts against the fourth surface 1233.

A surface of the second region 123a1 facing away from the negative electrode current collector 122 is the third surface 1232, the second body portion 161 of the negative electrode tab 16 is attached to the third surface 1232, and the third surface 1232 is a portion of a surface of the first negative electrode active substance layer 123a facing away from the negative electrode current collector 122.

In the embodiment where the negative electrode current collector 122 is provided with the first negative electrode active substance layer 123a on one side and not provided with the active substance layer on another side, the fourth surface 1233 of the negative electrode plate 12 is a surface of the negative electrode current collector 122 facing away from the first negative electrode active substance layer 123a.

In the embodiment where the negative electrode current collector 122 is provided with the first negative electrode active substance layer 123a on one side and the second negative electrode active substance layer 123b on another side, if observed along the thickness direction M of the negative electrode plate 12, the second region 123a1 and the second negative electrode active substance layer 123b overlap, the fourth surface 1233 of the negative electrode plate 12 can be a surface of the second negative electrode active substance layer 123b facing away from the negative electrode current collector 122.

In the embodiment where the negative electrode current collector 122 is provided with the first negative electrode active substance layer 123a on one side and the second negative electrode active substance layer 123b on another side, if observed along the thickness direction M of the negative electrode plate 12, the second region 123a1 and the second negative electrode active substance layer 123b do not overlap, the fourth surface 1233 of the negative electrode plate 12 is a surface of the negative electrode current collector 122 facing away from the first negative electrode active substance layer 123a.

The second through hole 1231 penetrates the negative electrode plate 12 in the thickness direction M of the negative electrode plate 12, with two ends of the second through hole 1231 in an extension direction extending to the third surface 1232 and the fourth surface 1233 respectively. A portion of the second through hole 1231 is located in the second region 123a1, and another portion of the second through hole 1231 is located in the negative electrode current collector 122.

An end of the second riveting portion 162 is connected to a surface where the second body portion 161 is attached to the third surface 1232, the second riveting portion 162 penetrates the second through hole 1231, and when the second riveting portion 162 passes through the portion of the second through hole 1231 located in the negative electrode current collector 122, the second riveting portion 162 comes into contact with the negative electrode current collector 122, which implements an electrical connection between the negative electrode tab 16 and the negative electrode current collector 122, thereby implementing an electrical connection between the negative electrode tab 16 and the negative electrode plate 12. Another end of the second riveting portion 162 extends out of the second through hole 1231 and protrudes from the fourth surface 1233. The end of the second riveting portion 162 protruding from the fourth surface 1233 forms a second limiting portion 1621, and the second limiting portion 1621 abuts against the fourth surface 1233. The second body portion 161 and the second limiting portion 1621 abut against the third surface 1232 and the fourth surface 1233 in the thickness direction M of the negative electrode plate 12 respectively, thereby preventing the negative electrode tab 16 from falling off the negative electrode plate 12.

The second riveting portion 162 of the negative electrode tab 16 protrudes from the second body portion 161 and penetrates the second through hole 1231, and the end of the second riveting portion 162 facing away from the second body portion 161 abuts against the fourth surface 1233, allowing for convenient connection and reducing the risk of the negative electrode tab 16 falling off the negative electrode plate 12.

The negative electrode tab 16 is riveted to the negative electrode plate 12 in various manners. For details, reference may be made to the riveting manners of the positive electrode tab 15 and the positive electrode plate 11, which are not described herein again.

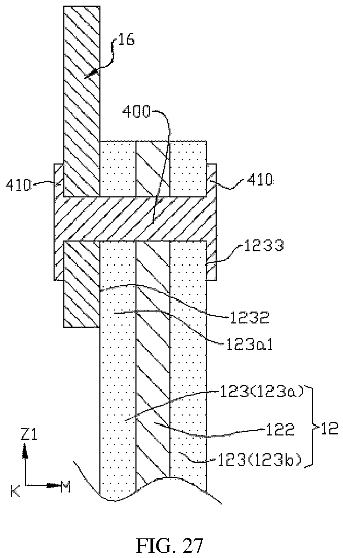

As shown in FIG. 27, in some other embodiments, the negative electrode tab 16 may be riveted to the negative electrode plate 12 using a second rivet 400. The battery cell 100 further includes the second rivet 400, and the negative electrode tab 16 is riveted to the negative electrode plate 12 in the second region 123a1 using the second rivet 400. The negative electrode tab 16 being riveted to the negative electrode plate 12 using the second rivet 400 helps improve the stability of the connection between the negative electrode tab 16 and the negative electrode plate 12 and enhance the current flow capacity.

In the thickness direction M of the negative electrode plate 12, the negative electrode tab 16 is disposed on the side of the first negative electrode active substance layer 123a facing away from the negative electrode current collector 122, and observed along the thickness direction M of the negative electrode plate 12, the negative electrode tab 16 and the first negative electrode active substance layer 123a overlap. In the width direction Z1 of the negative electrode plate 12, the negative electrode tab 16 protrudes from an end of the negative electrode plate 12. The second rivet 400 sequentially penetrates the negative electrode tab 16 and the negative electrode plate 12, with two ends of the second rivet 400 in the thickness direction M of the negative electrode plate 12 protruding from the third surface 1232 and the fourth surface 1233 respectively. The second rivet 400 is a conductor, and when the second rivet 400 penetrates the negative electrode plate 12, the second rivet 400 comes into contact with the negative electrode current collector 122 to implement an electrical connection between the negative electrode tab 16 and the negative electrode current collector 122 through the second rivet 400.

In the thickness direction M of the negative electrode plate 12, the two ends of the second rivet 400 are flattened, the two ends of the second rivet 400 protruding from the third surface 1232 and the fourth surface 1233 form two second limiting structures 410, and the two second limiting structures 410 abut against the third surface 1232 and the fourth surface 1233 respectively, to rivet the negative electrode tab 16 to the negative electrode plate 12 in the second region 123a1.

In the embodiment where the negative electrode tab 16 is riveted to the negative electrode plate 12 in the second region 123a1, the negative electrode tab 16 may alternatively be welded to an uncoated region of the negative electrode current collector 122 of the negative electrode plate 12 that is coated with no active substance layer, or may be adhered to an uncoated region of the negative electrode current collector 122 of the negative electrode plate 12 that is coated with no active substance layer through conductive adhesive.

In some other embodiments, the positive electrode tab 15 may alternatively be welded to an uncoated region of the positive electrode current collector 114 of the positive electrode plate 11 that is coated with no active substance layer, or may be adhered to an uncoated region of the positive electrode current collector 114 of the positive electrode plate 11 that is coated with no active substance layer through conductive adhesive. Some embodiments of this application provide a method for manufacturing the battery cell 100, including the following steps.

First, the coating structure of the positive electrode plate 11 is set to a continuous coating structure, specifically continuous double-sided coating, with no single-sided coating region on the positive electrode current collector 114 of the positive electrode plate 11. A small roll of positive electrode plate 11 is formed through cold pressing and slitting. The continuous double-sided coating is intended to implement continuous double-sided coating during coating of a large roll, which improves the coating efficiency, and eliminates time and steps for changing the coating manner, thereby improving the production efficiency. The positive electrode tab 15 is riveted to the positive electrode plate 11 in the double-sided coating region of the positive electrode plate 11 to implement an electrical connection between the positive electrode tab 15 and the positive electrode current collector 114. The positive electrode tab 15 is then led out. Because the positive electrode current collector 114 after continuous double-sided coating does not have an uncoated region that is coated with no positive electrode active substance layer 115, ultrasonic welding cannot be used for the positive electrode tab 15 and the positive electrode current collector 114. However, the riveting can implement an electrical connection between the double-sided coating region of the positive electrode plate 11 and the positive electrode tab 15.

The coating of the negative electrode plate 12 may be an intermittent coating structure, meaning that some regions of the negative electrode current collector 122 are coated with the negative electrode active substance layer 123 on both sides and some regions of the negative electrode current collector 122 are coated with the negative electrode active substance layer 123 on one side. A small roll of negative electrode plate 12 is formed through cold pressing and slitting. A fixed slot is formed through laser cleaning after coating and cold pressing of the negative electrode tab 16, and the negative electrode tab 16 is electrically connected to the negative electrode current collector 122 through ultrasonic welding. The negative electrode tab 16 is then led out.

Then, the first separator 13 and the second separator 14 are disposed between the positive electrode plate 11 and the negative electrode plate 12, and located on two sides of the negative electrode plate 12. The first winding starting end 1311 of the first separator 13 and the second winding starting end 1411 of the second separator 14 are both flush with the negative electrode winding starting end 1211 of the negative electrode plate 12. Considering equipment tolerance fluctuations, the distance between the first winding starting end 1311 of the first separator 13 and the negative electrode winding starting end 1211 in the first direction X may be 0 mm to 0.5 mm, and the distance between the second winding starting end 1411 of the second separator 14 and the negative electrode winding starting end 1211 in the first direction X may be 0 mm to 0.5 mm. The first separator 13 and the second separator 14 are thermally laminated, such that the adhesive layers on the portion of the first separator 13 extending beyond the negative electrode plate 12 in the extension direction Z of the winding axis and the portion of the second separator 14 extending beyond the negative electrode plate 12 in the extension direction Z of the winding axis are adhered together. In this way, the first separator 13 and the second separator 14 are connected to form the first connection portion Q1 and the second connection portion Q2 in the extension direction Z of the winding axis. Alternatively, after formation and hot pressing, the first separator 13 and the second separator 14 may be adhered to the negative electrode plate 12. In these embodiments, before winding, the negative electrode plate 12, the first separator 13, and the second separator 14 are thermally laminated, such that the first separator 13 and the second separator 14 are both adhered to the negative electrode plate 12, preventing the first separator 13 and the second separator 14 from shrinking. Typically, the structures of the first separator 13 and the second separator 14 include a PE base film, where the base film may have a thickness of 5 µm, the base film is coated with the adhesive layer on both sides, and the adhesive layer may be a PVDF adhesive layer with a thickness of 0.5 µm to 1.5 µm.

The positive electrode plate 11 and the negative electrode plate 12 are wound in opposite directions. The first wound and bent section of the positive electrode plate 11 is the first bent section 111, the first bent section 111 faces the negative electrode winding starting end 1211, and the first bent section 111 is provided with an adhesive tape (the protective member 20), which prevents short circuits due to contact between the first bent section 111 and the negative electrode winding starting end 1211. The adhesive tape includes the first section 21 and two second sections 22, where the first section 21 is located in the first bent region 10b, and the two second sections 22 are connected to two ends of the first section 21 respectively and located in the flat region 10a. The second section 22 overlaps with the negative electrode winding starting section 121, a length of the overlapping region between the second section 22 and the negative electrode winding starting section 121 is 5 mm, and the overlapping regions between the two second sections 22 and the negative electrode winding starting section 121 may have the same length. The length of 5 mm ensures that the negative electrode region corresponding to the adhering edge of the adhesive tape has no risk of lithium precipitation, which does not affect extractable capacity of the battery cell 100 during long-term cycling. However, the increased area of the adhesive tape adhered to the positive electrode results in certain energy density loss, which is less than or equal to 0.5%.

The terminating structure of the electrode assembly 10 is designed as single-sided negative electrode coating terminating. The electrode plate at the outermost layer of the electrode assembly 10 is the negative electrode plate 12, the negative electrode active substance layer 123 is provided on the side of the negative electrode winding terminating section 126 facing the winding axis, and the negative electrode active substance layer 123 is not provided on the side of the negative electrode winding terminating section 126 facing away from the winding axis, which is the single-sided negative electrode coating terminating. The negative electrode winding terminating end 1261, the first terminating end of the first separator 13, and the second terminating end of the second separator 14 are flush. The design of the single-sided negative electrode terminating is because the side of the negative electrode winding terminating section 126 facing the winding axis has the opposite positive electrode plate 11, which can play a role in lithium intercalation. The side of the negative electrode winding terminating section 126 facing away from the winding axis does not have the opposite negative electrode plate 12, so the side of the negative electrode winding terminating section 126 facing away from the winding axis may not be provided with the negative electrode active substance layer 123. The single-sided negative electrode coating terminating saves space in the thickness in the thickness direction M, reducing thickness of one negative electrode active substance layer 123 on one side, where one negative electrode active substance layer 123 generally has a thickness of 70 µm to 100 µm. This results in the volumetric energy density gain of about 1%, meaning that the volumetric energy density can be increased by about 1%.

The advantage of the negative electrode winding terminating end 1261, the first terminating end of the first separator 13, and the second terminating end of the second separator 14 being flush is that during winding, the first separator 13, the second separator 14, and the negative electrode plate 12 can be cut simultaneously with a double cutter. This improves the winding efficiency. If the negative electrode winding terminating end 1261, the first terminating end of the first separator 13, and the second terminating end of the second separator 14 are not flush, the negative electrode plate 12 needs to be cut first, followed by the first separator 13 and the second separator 14, and the winding tower needs to coordinate with the cutting action at the cutting moment to slow down the speed. In addition, a flush terminating cutting position can precisely serve as a flush winding head of the next electrode assembly 10, that is, as the negative electrode winding starting end 1211, first winding starting end 1311 of the first separator 13, and second winding starting end 1411 of the second separator 14 of the next electrode assembly 10. Matching of the two can increase the original winding from 15PPM to 20PPM. A hot melt adhesive tape is provided on the negative electrode winding terminating section 126, which is adhered to the housing or packaging bag of the battery cell 100 under high temperature and pressure, preventing the problem of displacement of the battery cell 100 during dropping.

After the winding is completed, the battery cell 100 is placed into a package or housing, followed by processes such as electrolyte injection and formation activation, to produce the finished battery cell 100.

Some embodiments of this application provide another method for manufacturing the battery cell 100, including the following steps.

First, the coating structure of the positive electrode plate 11 is set to a continuous coating structure, specifically continuous double-sided coating, with no single-sided coating region on the positive electrode current collector 114 of the positive electrode plate 11. A small roll of positive electrode plate 11 is formed through cold pressing and slitting. The positive electrode tab 15 is riveted to the positive electrode plate 11 in the double-sided coating region of the positive electrode plate 11 to implement an electrical connection between the positive electrode tab 15 and the positive electrode current collector 114. The positive electrode tab 15 is then led out. Because the positive electrode current collector 114 after continuous double-sided coating does not have an uncoated region that is coated with no positive electrode active substance layer 115, ultrasonic welding cannot be used for the positive electrode tab 15 and the positive electrode current collector 114. However, the riveting can implement an electrical connection between the double-sided coating region of the positive electrode plate 11 and the positive electrode tab 15.

The coating of the anode electrode (the negative electrode plate 12) may also be set to a continuous coating structure, meaning that the negative electrode plate 12 is also set to continuous double-sided coating, with no single-sided coating region on the negative electrode current collector 122 of the negative electrode plate 12. A small roll of negative electrode plate 12 is formed through cold pressing and slitting. Compared to the manner where the negative electrode current collector 122 of the negative electrode plate 12 is subjected to double-sided coating in some regions and single-sided coating in some regions, the continuous double-sided coating of the negative electrode plate 12 is intended to implement continuous double-sided coating during coating of a large roll, which improves the coating efficiency, and eliminates time and steps for changing the coating manner, thereby improving the production efficiency. The negative electrode tab 16 is riveted to the negative electrode plate 12 in the double-sided coating region of the negative electrode plate 12 to implement an electrical connection between the negative electrode tab 16 and the negative electrode current collector 122. The negative electrode tab 16 is then led out. Because the negative electrode current collector 122 after continuous double-sided coating does not have an uncoated region that is coated with no negative electrode active substance layer 123, ultrasonic welding cannot be used for the negative electrode tab 16 and the negative electrode current collector 122. However, the riveting can implement an electrical connection between the double-sided coating region of the negative electrode plate 12 and the negative electrode tab 16. Then, the first separator 13 and the second separator 14 are disposed between the positive electrode plate 11 and the negative electrode plate 12, and located on two sides of the negative electrode plate 12. The first winding starting end 1311 of the first separator 13 and the second winding starting end 1411 of the second separator 14 are both flush with the negative electrode winding starting end 1211 of the negative electrode plate 12. The first separator 13 and the second separator 14 are thermally laminated, such that the adhesive layers on the portion of the first separator 13 extending beyond the negative electrode plate 12 in the extension direction Z of the winding axis and the portion of the second separator 14 extending beyond the negative electrode plate 12 in the extension direction Z of the winding axis are adhered together. In this way, the first separator 13 and the second separator 14 are connected to form the first connection portion Q1 and the second connection portion Q2 in the extension direction Z of the winding axis. Alternatively, after formation and hot pressing, the first separator 13 and the second separator 14 may be adhered to the negative electrode plate 12. In these embodiments, before winding, the negative electrode plate 12, the first separator 13, and the second separator 14 are thermally laminated, such that the first separator 13 and the second separator 14 are both adhered to the negative electrode plate 12, constraining deformation of the first separator 13 and the second separator 14, thereby alleviating the problem of the negative electrode plate 12 being exposed to come into contact with the positive electrode plate 11 due to shrinkage of the first separator 13 and the second separator 14.

The positive electrode plate 11 and the negative electrode plate 12 are wound in opposite directions. The first wound and bent section of the positive electrode plate 11 is the first bent section 111, the first bent section 111 faces the negative electrode winding starting end 1211, and the first bent section 111 is provided with an adhesive tape (the protective member 20), which prevents short circuits due to contact between the first bent section 111 and the negative electrode winding starting end 1211. The adhesive tape includes the first section 21 and two second sections 22, where the first section 21 is located in the first bent region 10b, and the two second sections 22 are connected to two ends of the first section 21 respectively and located in the flat region 10a. The second section 22 overlaps with the negative electrode winding starting section 121, a length of the overlapping region between the second section 22 and the negative electrode winding starting section 121 is 3 mm, and the overlapping regions between the two second sections 22 and the negative electrode winding starting section 121 may have the same length. The design of 3 mm can reduce the area of the adhesive tape adhered to the positive electrode active substance layer 115, allowing the positive electrode active substance layer 115 of the positive electrode plate 11 to play its role as much as possible, thereby helping increase the energy density of the battery cell 100, where the maximum increase in the volumetric energy density of the battery cell 100 can be 0.3%. The lower limit of the length by which the adhesive tape extends beyond the negative electrode winding starting end 1211 in the horizontal direction is 2 mm. The design of less than 2 mm may have the risk of lithium precipitation at the negative electrode edge region corresponding to the adhesive tape, affecting extractable capacity of the battery cell 100 during cycling.

The terminating structure of the electrode assembly 10 is designed as double-sided negative electrode coating terminating. The electrode plate at the outermost layer of the electrode assembly 10 is the negative electrode plate 12, the negative electrode active substance layer 123 is provided on the side of the negative electrode winding terminating section 126 facing the winding axis, and the negative electrode active substance layer 123 is provided on the side of the negative electrode winding terminating section 126 facing away from the winding axis, which is the double-sided negative electrode coating terminating. The negative electrode winding terminating end 1261, the first terminating end of the first separator 13, and the second terminating end of the second separator 14 are flush.

A hot melt adhesive tape is provided on the negative electrode winding terminating section 126, which is adhered to the housing or packaging bag of the battery cell 100 under high temperature and pressure, preventing the problem of displacement of the battery cell 100 during dropping.

After the winding is completed, the battery cell 100 is placed into a package or housing, followed by processes such as electrolyte injection and formation activation, to produce the finished battery cell 100.

One implementation of the riveting process provided in some embodiments of this application is punching holes in the electrode plate, placing the tab in the punched region of the electrode plate, aligning the punch needle 200 with the punched position of the electrode plate, piercing the tab, and finally flattening the flange of the pierced tab on the other side. During the flattening, the active substance is compressed to expose the current collector to come into contact with the tab to form an electrical connection. The riveting process is suitable for the electrical connection between the positive electrode tab 15 and the double-sided coated positive electrode plate 11 as well as the electrical connection between the negative electrode tab 16 and the double-sided coated negative electrode plate 12.

An embodiment of this application further provides an electric device. The electric device includes the battery cell 100 according to any one of the foregoing embodiments. The battery cell 100 provides electrical energy for the electric device to perform its functions. The electric device may include one battery cell 100 or a plurality of battery cells 100. In the embodiment where the electric device includes a plurality of battery cells 100, the plurality of battery cells 100 may be connected in series, parallel, or series-parallel, where being connected in series-parallel means a combination of series and parallel connections of the plurality of battery cells 100.

The foregoing embodiments are merely preferred embodiments of this application which are not intended to limit this application. Persons skilled in the art understand that this application may have various modifications and variations. Any modification, equivalent replacement, and improvement made without departing from the spirit and principle of this application shall fall within the protection scope of this application.

## Claims

1. A battery cell (100), comprising:
an electrode assembly (10), wherein the electrode assembly (10) is a wound structure, and the electrode assembly (10) comprises a flat region (10a) and a first bent region; in a first direction, the first bent region being connected to an end of the flat region (10a);
the electrode assembly (10) comprises a negative electrode plate (12); a positive electrode plate (11), and a first separator (13) configured to separate the positive electrode plate (11) from the negative electrode plate (12), wherein the positive electrode plate (11) comprises a first bent section (111) located in the first bent region, and a positive electrode winding starting section (112) and a first flat section (113) located in the flat region (10a); wherein in a second direction, the positive electrode winding starting section (112) is disposed opposite to the first flat section (113), the first flat section (113) and the positive electrode winding starting section (112) are connected to two ends of the first bent section (111) respectively, and an end of the positive electrode winding starting section (112) facing away from the first bent section (111) is a positive electrode winding starting end (1121) of the positive electrode plate (11);
the negative electrode plate (12) comprises a negative electrode winding starting section (121), wherein the negative electrode winding starting section (121) is located in the flat region (10a); in the second direction, the negative electrode winding starting section (121) is located between the positive electrode winding starting section (112) and the first flat section (113), and in the first direction, an end of the negative electrode winding starting section (121) facing the first bent section (111) is a negative electrode winding starting end (1211) of the negative electrode plate (12); wherein
a negative electrode active substance layer is disposed on one side of the negative electrode winding starting section (121) opposite to a positive electrode active substance layer (115) on the positive electrode winding starting section (112); a negative electrode active substance layer is disposed on another side of the negative electrode winding starting section (121) opposite to a positive electrode active substance layer (115) on the first flat section (113); the first separator (13) has a first winding starting end (1311), the first winding starting end (1311) being flush with the positive electrode winding starting end (1121), or the first winding starting end (1311) being flush with the negative electrode winding starting end (1211);
an extension direction of a winding axis, the first direction, and the second direction of the electrode assembly (10) being perpendicular to each other.

2. The battery cell (100) according to claim 1, wherein the electrode assembly (10) further comprises a second bent region (10c), in the first direction, the second bent region (10c) being located on a side of the flat region (10a) facing away from the first bent region; the negative electrode plate (12) further comprises a second bent section located in the second bent region (10c) and a second flat section located in the flat region (10a); wherein in the second direction, the second flat section is disposed opposite to the negative electrode winding starting section (121), and the second flat section and the negative electrode winding starting section (121) are connected to two ends of the second bent section respectively; wherein
positive electrode active substance layer (115)s on two sides of the positive electrode winding starting section (112) are disposed opposite to the negative electrode active substance layer on the negative electrode winding starting section (121) and a negative electrode active substance layer on the second flat section respectively.

3. The battery cell (100) according to claim 1, wherein the negative electrode plate (12) comprises a negative electrode current collector (122); wherein in a winding direction of the electrode assembly (10), the negative electrode active substance layer is provided on both sides of the negative electrode current collector (122) at any position; and/or the positive electrode plate (11) comprises a positive electrode current collector (114), wherein in the winding direction of the electrode assembly (10), the positive electrode active substance layer (115) is provided on both sides of the positive electrode current collector (114) at any position.

4. The battery cell (100) according to claim 1, wherein the electrode assembly (10) further comprises a second separator (14), wherein the second separator (14) is configured to separate the positive electrode plate (11) from the negative electrode plate (12), and the first separator (13) and the second separator (14) are located on two sides of the negative electrode plate (12) respectively; wherein
the first separator (13) and the second separator (14) are connected to form a first connection portion (Q1) and a second connection portion (Q2), and in the extension direction of the winding axis, the first connection portion (Q1) and the second connection portion (Q2) are located on two sides of the negative electrode plate (12) respectively.

5. The battery cell (100) according to claim 4, wherein the first separator (13) has a first winding starting section (131) located in the flat region (10a), an end of the first winding starting section (131) being the first winding starting end (1311) of the first separator (13), and the second separator (14) has a second winding starting section (141) located in the flat region (10a), an end of the second winding starting section (141) being a second winding starting end of the second separator (14), wherein in the second direction, the first winding starting section (131) and the second winding starting section (141) are located on two sides of the negative electrode winding starting section (121) respectively; wherein
the first winding starting section (131) and the second winding starting section (141) are connected to form the first connection portion (Q1) and the second connection portion (Q2), and in the extension direction of the winding axis, the first connection portion (Q1) and the second connection portion (Q2) are located on two sides of the negative electrode winding starting section (121) respectively.

6. The battery cell (100) according to claim 1, wherein the electrode assembly (10) further comprises a second separator (14), wherein the second separator (14) is configured to separate the positive electrode plate (11) from the negative electrode plate (12); wherein
the first separator (13) comprises a first base film and a first adhesive layer, wherein at least one side of the first base film is provided with the first adhesive layer, and the positive electrode plate (11) or the negative electrode plate (12) is adhered to the first base film through the first adhesive layer; and/or the second separator (14) comprises a second base film and a second adhesive layer, wherein at least one side of the second base film is provided with the second adhesive layer, and the positive electrode plate (11) or the negative electrode plate (12) is adhered to the second base film through the second adhesive layer.

7. The battery cell (100) according to claim 1, wherein the electrode assembly (10) further comprises a second separator (14), wherein the second separator (14) is configured to separate the positive electrode plate (11) from the negative electrode plate (12), the first separator (13) having the first winding starting end (1311), and the second separator (14) having a second winding starting end; wherein
the first separator (13) and the second separator (14) are disposed on two sides of the negative electrode plate (12), the first winding starting end (1311) is flush with the negative electrode winding starting end (1211), and the second winding starting end is flush with the negative electrode winding starting end (1211).

8. The battery cell (100) according to claim 1, wherein the electrode assembly (10) further comprises a second separator (14), wherein the second separator (14) is configured to separate the positive electrode plate (11) from the negative electrode plate (12), the first separator (13) having the first winding starting end (1311), and the second separator (14) having a second winding starting end; wherein
the first separator (13) and the second separator (14) are disposed on two sides of the positive electrode plate (11), the first winding starting end (1311) is flush with the positive electrode winding starting end (1121), and the second winding starting end is flush with the positive electrode winding starting end (1121).

9. The battery cell (100) according to claim 1, wherein a positive electrode active substance layer (115) on the first bent section (111) facing the negative electrode winding starting end (1211) is a first positive electrode active substance portion; and
the battery cell (100) further comprises a protective member (20), wherein at least a portion of the protective member (20) is located between the first positive electrode active substance portion and the negative electrode winding starting end (1211).

10. The battery cell (100) according to claim 9, wherein the protective member (20) comprises a first section, wherein the first section (21)is located in the first bent region, and the first section (21)is located between the first positive electrode active substance portion and the negative electrode winding starting end (1211).

11. The battery cell (100) according to claim 10, wherein the protective member (20) further comprises a second section, wherein the second section (22)is located in the flat region (10a), the second section (22)is connected to an end of the first section, and observed along the second direction, the second section (22)and the negative electrode winding starting section (121) at least partially overlap.

12. The battery cell (100) according to claim 11, wherein in the first direction, a distance between an end of the second section (22)facing away from the first section (21)and the negative electrode winding starting end (1211) is L₁, wherein L₁ % 2 mm.

13. The battery cell (100) according to claim 11, wherein L₁ ≤ 10 mm.

14. The battery cell (100) according to claim 11, wherein two ends of the first section (21)are each connected to the second section, and in the second direction, the second sections at the two ends of the first section (21)are located on two sides of the negative electrode winding starting section (121) respectively.

15. The battery cell (100) according to claim 9, wherein the protective member (20) is fixed to the first positive electrode active substance portion.

16. The battery cell (100) according to claim 1, wherein the positive electrode plate (11) further comprises a positive electrode winding terminating section (116) located in the flat region (10a), wherein an end of the positive electrode winding terminating section (116) is a positive electrode winding terminating end of the positive electrode plate (11); and
the negative electrode plate (12) further comprises a negative electrode winding terminating section (126), wherein an end of the negative electrode winding terminating section (126) forms a negative electrode winding terminating end (1261) of the negative electrode plate (12), and the negative electrode winding terminating section (126) is located on an outer side of the positive electrode winding terminating section (116).

17. The battery cell (100) according to claim 16, wherein the negative electrode active substance layer is provided on a side of the negative electrode winding terminating section (126) facing the winding axis, and the negative electrode active substance layer is not provided on a side of the negative electrode winding terminating section (126) facing away from the winding axis.

18. The battery cell (100) according to claim 16, wherein the negative electrode active substance layer is provided on both sides of the negative electrode winding terminating section (126).

19. The battery cell (100) according to claim 1, wherein the electrode assembly (10) further comprises a second separator (14), wherein the second separator (14) is configured to separate the positive electrode plate (11) from the negative electrode plate (12); wherein
the first separator (13) further comprises a first winding terminating section (132), an end of the first winding terminating section (132) being a first winding terminating end(1321) of the first separator (13), and the second separator (14) further comprises a second winding terminating section (142), an end of the second winding terminating section (142) being a second winding terminating end (1421) of the second separator (14); and
the negative electrode plate (12) further comprises a negative electrode winding terminating section (126), wherein an end of the negative electrode winding terminating section (126) forms a negative electrode winding terminating end (1261) of the negative electrode plate (12); wherein
the first winding terminating section (132) and the second winding terminating section (142) are located on two sides of the negative electrode winding terminating section (126) respectively, the first winding terminating end(1321) is flush with the negative electrode winding terminating end (1261), and the second winding terminating end (1421) is flush with the negative electrode winding terminating end (1261).

20. The battery cell (100) according to claim 1, wherein the electrode assembly (10) further comprises a positive electrode tab (15) and a negative electrode tab (16); wherein
the positive electrode tab (15) is riveted to the positive electrode plate (11); and/or the negative electrode tab (16) is riveted to the negative electrode plate (12).

21. The battery cell (100) according to claim 20, wherein the positive electrode plate (11) comprises a positive electrode current collector (114), wherein the positive electrode active substance layer (115) on a side of the positive electrode current collector (114) is a first positive electrode active substance layer (115), and observed along a direction perpendicular to a thickness direction of the positive electrode plate (11), the first positive electrode active substance layer (115) has a first region (115a1) located between the positive electrode tab (15) and the positive electrode current collector (114), the positive electrode tab (15) being riveted to the positive electrode plate (11) in the first region (115a1).

22. The battery cell (100) according to claim 21, wherein the positive electrode plate (11) is provided with a first through hole (1152) penetrating through the positive electrode plate (11) in the thickness direction, and observed along the thickness direction of the positive electrode plate (11), the first through hole (1152) is located in the first region (115a1); and
the positive electrode tab (15) has a first body portion (151) and a first riveting portion (152), wherein the first region (115a1) has a first surface (1153) facing away from the positive electrode current collector (114), the positive electrode plate (11) has a second surface (1154) opposite to the first surface (1153), the first body portion (151) is disposed on the first surface (1153), the first riveting portion (152) protrudes from the first body portion (151) and penetrates the first through hole (1152), and an end of the first riveting portion (152) facing away from the first body portion (151) abuts against the second surface (1154).

23. The battery cell (100) according to claim 20, wherein the negative electrode plate (12) comprises a negative electrode current collector (122), wherein the negative electrode active substance layer on a side of the negative electrode current collector (122) is a first negative electrode active substance layer (123a), and observed along a direction perpendicular to a thickness direction of the negative electrode plate (12), the first negative electrode active substance layer (123a) has a second region located between the negative electrode tab (16) and the negative electrode current collector (122), the negative electrode tab (16) being riveted to the negative electrode plate (12) in the second region.

24. The battery cell (100) according to claim 23, wherein the negative electrode plate (12) is provided with a second through hole penetrating through the negative electrode plate (12) in the thickness direction, and observed along the thickness direction of the negative electrode plate (12), the second through hole is located in the second region; and
the negative electrode tab (16) has a second body portion (161) and a second riveting portion, wherein the second region has a third surface facing away from the negative electrode current collector (122), the negative electrode plate (12) has a fourth surface opposite to the third surface, the second body portion (161) is disposed on the third surface, the second riveting portion protrudes from the second body portion (161) and penetrates the second through hole, and an end of the second riveting portion facing away from the second body portion (161) abuts against the fourth surface.

25. An electric device, comprising the battery cell (100) according to any one of claims 1 to 24.
